# EUROPEAN PATENT APPLICATION

(11) **EP 4 757 222 A1**
(43) Date of publication of application: **10.06.2026**
(21) Application number: 23946952.1
(22) Date of filing: 28.07.2023
(51) Int. Cl.: H04L 1/06, H04W 28/06

(54) **INFORMATION COMPRESSION METHOD AND APPARATUS, AND TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: CHEN, Wenhong, Dongguan, Guangdong 523860 (CN); TIAN, Wenqiang, Dongguan, Guangdong 523860 (CN)
(74) Representative: Taor, Simon Edward William
(86) International application number: PCT/CN2023/109976
(87) International publication number: WO 2025/024995

(57) **Abstract**

Provided in the embodiments of the present application are an information compression method and apparatus, and a terminal device and a network device. The method comprises: according to the priority of first channel state information (CSI) in CSI that is born on an uplink channel, a terminal device determining that it is necessary to perform compression on the first CSI, wherein the first CSI is AI/MI-based CSI, and the uplink channel is used for bearing the first CSI; and the terminal device performing compression on the first CSI by means of adjusting a first model, wherein the first model is used for generating the first CSI.

## Description

### TECHNICAL FIELD

The embodiments of the present disclosure relate to the technical field of mobile communication, in particular to methods and apparatuses for information compression, a terminal device, and a network device.

### BACKGROUND

In order to enable the network device to perform reasonable scheduling, the terminal device may send Channel State Information (CSI) to the network device, to enable the network device can determine scheduling information of the terminal device, such as the number of transmission layers, the precoding matrix, the transmission beam, and the modulation and coding manner, based on the CSI.

When the great number of bits is carried in one piece of CSI, the terminal device may selectively perform CSI omission on the CSI, that is, the terminal device may omit a part or all of the information in the CSI. However, omitting a part or all of the information in the CSI will cause the loss of channel information and affect the communication performance.

### SUMMARY

The embodiments of the present disclosure provide methods and apparatuses for information compression, a terminal device, and a network device.

A method for information compression according to the embodiments of the present disclosure includes the following operations.

A terminal device determines that the first CSI needs to be compressed according to a priority of the first CSI among at least one piece of CSI carried by an uplink channel. The first CSI is an Artificial Intelligence (Al)/Machine Learning (ML)-based CSI, and the uplink channel is used to carry the first CSI.

The terminal device compresses the first CSI by adjusting the first model. The first model is used to generate the first CSI.

A method for information compression according to the embodiments of the present disclosure includes the following operations.

A network device determines that a terminal device needs to compress the first CSI according to a priority of the first CSI among at least one piece of CSI carried by an uplink channel. The first CSI is AI/ML-based CSI, and the uplink channel is used to carry the first CSI.

The network device receives compressed first CSI. The compressed first CSI is obtained by the terminal device compressing the first CSI by adjusting the first model.

An apparatus for information compression according to the embodiments of the present disclosure is applied to a terminal device. The apparatus includes the first determining unit and a compressing unit.

The first determining unit is configured to determine, according to a priority of the first CSI among at least one piece of CSI carried by an uplink channel, that the first CSI needs to be compressed. The first CSI is Artificial Intelligence AI/ML-based CSI, and the uplink channel is used to carry the first CSI.

The compressing unit is configured to compress the first CSI by adjusting the first model. The first model is used to generate the first CSI.

An apparatus for information compression according to the embodiments of the present disclosure is applied to a network device. The apparatus includes the second determining unit and a receiving unit.

The second determining unit is configured to determine, according to a priority of the first CSI among at least one piece of CSI carried by an uplink channel, that terminal device needs to compress the first CSI. The first CSI is AI/ML-based CSI, and the uplink channel is used to carry the first CSI.

The receiving unit is configured to receive compressed first CSI. The compressed first CSI is obtained by the terminal device compressing the first CSI by adjusting the first model.

A communication device according to the embodiments of the present disclosure may be a terminal device or a network device in the above solutions. The communication device includes a processor and a memory. The memory is configured to store a computer program, and the processor is configured to invoke and execute the computer program stored in the memory to perform the methods for information compression described above.

The chip according to the embodiments of the present disclosure is used for implementing the methods for information compression described above.

Specifically, the chip includes a processor. The processor is configured to invoke and execute a computer program from a memory to cause a device on which the chip is mounted to perform the methods for information compression described above.

A computer-readable storage medium according to the embodiments of the present disclosure is configured to store a computer program that causes a computer to execute the methods for information compression described above.

The computer program product according to the embodiments of the present disclosure includes computer program instructions that cause a computer to perform the methods for information compression described above.

The computer program according to the embodiments of the present disclosure, when it is run on a computer, causes the computer to perform the methods for information compression described above.

The embodiments of the present disclosure provide methods for information compression. When the great number of bits is carried in AI/ML-based first CSI, the terminal device may adjust the first model for generating the first CSI, and process channel information by using the adjusted first model to generate the compressed first CSI, thereby reducing the number of bits of the first CSI. In addition, the first CSI is compressed by adjusting the first model, and the original channel information is not omitted in the compression process. The compressed first CSI may also be used for the network device to recover the complete channel information, and the compressed first CSI may represent the complete channel information. According to the methods for information compression provided by the embodiments of the present disclosure, the number of bits of the CSI can be reduced, and the integrity of channel information can be ensured, and further the communication performance of the system can be ensured.

### BRIEF DESCRIPTION OF THE DRAWINGS

The accompanying drawings described herein are intended to provide a further understanding of the present disclosure, and constitute a part of the present disclosure, and the schematic embodiments of the present disclosure and the description thereof are intended to explain the present disclosure, and do not constitute an undue limitation to the present disclosure.
FIG. 1 is a schematic diagram of communication architecture according to an embodiment of the present disclosure.
FIG. 2 is a schematic structural diagram of a neuron according to an embodiment of the present disclosure.
FIG. 3 is a schematic structural diagram of a neural network according to an embodiment of the present disclosure.
FIG. 4 is a schematic diagram of a CSI report manner according to an embodiment of the present disclosure.
FIG. 5 is the first schematic flowchart of a method for information compression according to an embodiment of the present disclosure.
FIG. 6 is a schematic diagram of a neural network for CSI feedback according to an embodiment of the present disclosure.
FIG. 7 is the second schematic flowchart of a method for information compression according to an embodiment of the present disclosure.
FIG. 8 is the third schematic flowchart of a method for information compression according to an embodiment of the present disclosure.
FIG. 9 is a schematic diagram of structure and composition of an apparatus 900 for communication processing according to an embodiment of the present disclosure.
FIG. 10 is a schematic diagram of structure and composition of an apparatus 1000 for communication processing according to an embodiment of the present disclosure.
FIG. 11 is a schematic structural diagram of a communication device according to an embodiment of the present disclosure.
FIG. 12 is a schematic structural diagram of a chip according to an embodiment of the present disclosure.
FIG. 13 is a schematic block diagram of a communication system according to an embodiment of the present disclosure.

### DETAILED DESCRIPTION

Hereinafter, the technical solutions in the embodiments of the present disclosure will be described with reference to the accompanying drawings in the embodiments of the present disclosure. It is apparent that the described embodiments are a part of the embodiments of the present disclosure, rather than all of the embodiments. Based on the embodiments in the present disclosure, all other embodiments obtained by those skilled in the art without creative work fall within the scope of protection of the present disclosure.

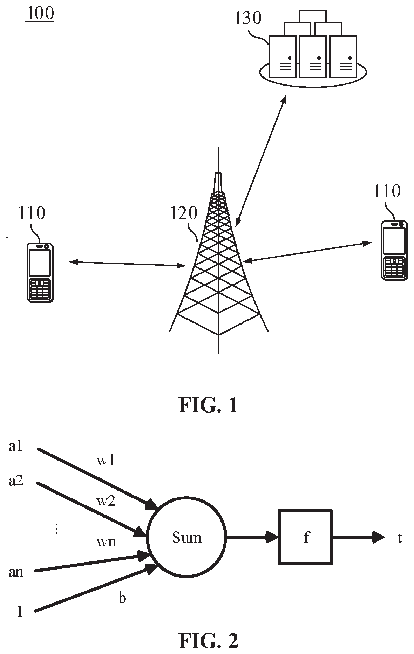

FIG. 1 is a schematic diagram of an application scenario according to an embodiment of the present disclosure.

As illustrated in FIG. 1, the communication system 100 may include terminal devices 110 and a network device 120. The network device 120 may communicate with the terminal devices 110 through air interfaces. Multi-service transmission is supported between the terminal device 110 and the network device 120.

It should be understood that the communication device 100 is illustrated as an example in the embodiments of the present disclosure, but the embodiments of the present disclosure are not limited thereto. That is, the technical solutions of the embodiments of the present disclosure may be applied to various communication systems, such as a Long Term Evolution (LTE) system, an LTE Time Division Duplex (TDD), an Universal Mobile Telecommunication System (UMTS), an Internet of Things (IoT) system, a Narrow Band Internet of Things (NB-IoT) system, an enhanced Machine-Type Communications (eMTC) system, a 5G communication system (which is also referred to as a New Radio (NR) communication system), or a future communication system, etc.

In the communication system 100 illustrated in FIG. 1, the network device 120 may be an access network device that communicates with the terminal devices 110. The access network device may provide communication coverage for a particular geographic area and may communicate with the terminal devices 110 (e.g., User Equipment (UE)) within the coverage area.

The network device 120 may be an Evolutional Node B (eNB or eNodeB) in the LTE system, a Next Generation Radio Access Network (NG RAN) device, a base station (gNB) in the NR system, a wireless controller in a Cloud Radio Access Network (CRAN), a relay station, an access point, an in-vehicle device, a wearable device, a hub, a switch, a bridge, a router, or a network device in a future evolutional Public Land Mobile Network (PLMN), etc.

The terminal device 110 may be any terminal device including, but not limited to, a terminal device connected to the network device 120 or other terminal devices in a wired or wireless manner.

For example, the terminal device 110 may be an access terminal, UE, a user unit, a user station, a mobile station, a mobile stage, a remote station, a remote terminal, a mobile device, a user terminal, a terminal, a wireless communication device, a user agent or a user device. The access terminal may be a cellular telephone, a cordless telephone, a Session Initiation Protocol (SIP) telephone, an IoT device, a satellite handheld terminal, a Wireless Local Loop (WLL) station, a Personal Digital Assistant (PDA), a handheld device having wireless communication functionality, a computing device or other processing device connected to a wireless modem, an in-vehicle device, a wearable device, a terminal device in a 5G network or a terminal device in a future evolutional network, or the like.

The terminal device 110 may be used for Device to Device (D2D) communication.

The wireless communication system 100 may further include a core network device 130 that communicates with the base station, and the core network device 130 may be a 5G Core (5GC) device, for example, an Access and Mobility Management Function (AMF), an Authentication Server Function (AUSF), a User Plane Function (UPF), or a Session Management Function (SMF). Alternatively, the core network device 130 may also be an Evolved Packet Core (EPC) device in the LTE network, for example, a Session Management Function + Core Packet Gateway (SMF + PGW-C) device. It should be understood that the SMF + PGW-C can simultaneously implement functions that can be implemented by the SMF and PGW-C. In the process of network evolution, the core network device may be called as other names, or a new network entity may be formed by dividing the functions of the core network, which is not limited by the embodiments of the present disclosure.

The connection can be established among the respective functional units in the communication system 100 through Next Generation (NG) network interfaces to achieve communication.

For example, the terminal device establishes an air interface connection with the access network device through the Uu interface, for transmitting user plane data and control plane signaling. The terminal device may establish a control plane signaling connection with the AMF through the NG interface 1 (referred to as N1 for short). The access network device, such as a next generation radio access base station (gNB), may establish a user plane data connection with the UPF through an NG interface 3 (referred to as N3 for short). The access network device may establish a control plane signaling connection with the AMF through the NG interface 2 (referred to as N2 for short). The UPF may establish a control plane signaling connection with the SMF through the NG interface 4 (referred to as N4 for short). The UPF may interact user plane data with the data network through the NG interface 6 (referred to as N6 for short). The AMF may establish a control plane signaling connection with the SMF through the NG interface 11 (referred to as N11 for short). The SMF may establish a control plane signaling connection with the PCF through the NG interface 7 (referred to as N7 for short).

FIG. 1 exemplarily illustrates one base station, one core network device, and two terminal devices. Alternatively, the wireless communication system 100 may include multiple base station devices and another number of terminal devices may be included within the coverage range of each base station, which is not limited by the embodiments of the present disclosure.

It should be noted that FIG. 1 only exemplarily illustrates a system to which the present disclosure is applied, and of course, the methods shown in the embodiments of the present disclosure may also be applied to other systems. Further, the terms "system" and "network" are often used interchangeably herein. Herein, the term "and/or" is only used for describing an association relationship between association objects, and means that there may be three relationships. For example, A and/or B may mean that A exists alone, A and B exist simultaneously, and B exists alone. In addition, the character "/" herein generally represent that there is an "or" relationship between association objects. It should also be understood that the "indication" mentioned in the embodiments of the present disclosure may be a direct indication, an indirect indication, or be used for describing an association relationship. For example, A indicates B, which may mean that A directly indicates B, for example, B may be acquired by A, which may also mean that A indicates B indirectly, for example A indicates C, and B may be acquired through C, which may represent that there is an association relationship between A and B. It should also be understood that "correspondence" mentioned in the embodiments of the present disclosure may indicate that there is a direct correspondence or indirect correspondence between the two objects, there is an association relationship between the two objects, or the two objections have a relationship between indicating and being indicated, configuring and being configured, or the like. It should also be understood that the "predefined" or "predefined rules" mentioned in the embodiments of the present disclosure may be implemented by storing corresponding codes, tables, or other methods for indicating relevant information in advance in devices (e.g., including the terminal device and the network device), and specific implementations thereof are not limited in the present disclosure. For example, pre-definition may refer to definition in the protocol. It should also be understood that in the embodiments of the present disclosure, the "protocol" may refer to a standard protocol in the communication field, which may include, for example, an LTE protocol, an NR protocol, and related protocols applied in future communication systems, which is not limited in the present disclosure.

In order to facilitate understanding of the technical solutions of the embodiments of the present disclosure, the related technologies of the embodiments of the present disclosure are described below, and the related technologies below may be, as optional solutions, arbitrarily combined with the technical solutions of the embodiments of the present disclosure, and all of them belong to the scope of protection of the embodiments of the present disclosure.

In view of the great success of Artificial Intelligence (Al)/Machine Learning (ML) technology in computer vision, natural language processing, etc., the AI/ML technology is tried to be used in the communication field to seek new technical ideas to solve the technical problems limited by traditional methods.

The neural network model is introduced in detail below.

The neural network is an operation model composed of multiple neuron nodes connected to each other, in which the connection between nodes represents the weighted value from the input signal to the output signal, which is called the weight. In Each node, a weighted summation is performed on different input signals and a result is output through a specific activation function. Referring to the schematic structural diagram of a neuron illustrated in FIG. 2, a1, a2,..., an and 1 are inputs of the neuron, w1, w2,..., wn and b represent weights, Sum represents a summation function, f represents an activation function, and t represents an output result.

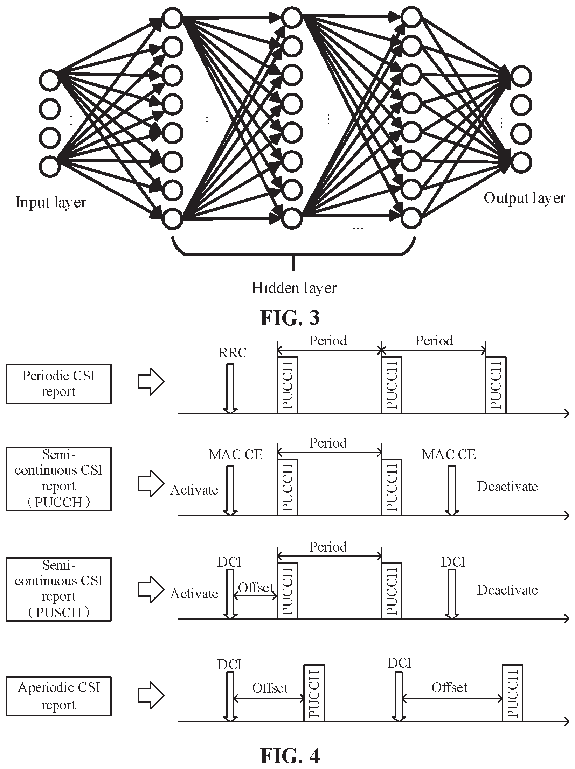

A simple neural network is illustrated in FIG. 3, which includes an input layer, hidden layers and an output layer. Through different connection manners of multiple neurons, weights and activation functions, different outputs may be generated, and then the mapping relationship from input to output may be fitted. Each upper-level node is connected to all its lower-level nodes. This fully connected model may also be called Deep Neural Network (DNN).

A neural network model may be trained and obtained through the processes such as the construction of a data set, the training, the verification and the testing. The training may be classified into offline training and online training. A static training result may be obtained through the offline training of the data set, which may be called as the offline training here. In the process of using the neural network model by the network device or the terminal device, with further measurement and/or reporting of the terminal device, the network device may continue to collect more data and perform real-time online training to optimize the parameters of the neural network model to achieve a better inference and prediction result. After the neural network model is obtained, the corresponding output of the model may be obtained by inferring by inputting the currently obtained information into the model.

The CSI feedback is detailed below.

In order to enable the network device to perform reasonable scheduling, the terminal device may send CSI for the downlink to the network device, to enable the network device determines the scheduling information of the terminal device, such as the number of transmission layers, the precoding matrix, the transmission beam, and the modulation and coding manner, based on the CSI for the downlink. The terminal device sending the CSI to the network device is performed based on the CSI report configuration indicated by the network device, and the uplink resource used by the terminal device to report the CSI and the downlink reference signal used for performing CSI measurement are both indicated by the CSI report configuration.

It should be noted that the CSI in the embodiments of the present disclosure may also be referred to as the CSI report. In the embodiments of the present disclosure, the CSI is equivalent to the CSI report, and may be replaced with the CSI report.

In practical applications, each CSI report configuration may correspond to a CSI report, and each CSI report may include different information such as a CSI Reference Signal (CSI-RS) Resource Indicator (CRI), a Rank Indicator (RI), a Precoding Matrix Indicator (PMI), a Channel Quality Indicator (CQI), and the like.

What content/information is included in the CSI may be determined by reportQuantity information in the CSI report configuration. The reportQuantity information may indicate one of the following reportQuantities:

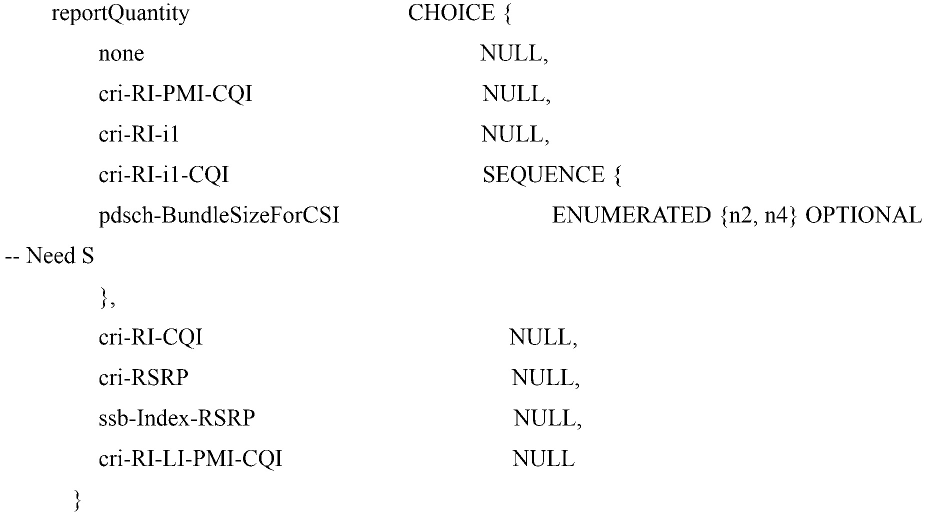

The CRI is used to determine a CSI-RS resource currently used for the channel measurement from multiple CSI-RS resources, and an Interference Measurement Resource (IMR) currently used for the interference measurement.

RI is used to report a recommended number of transmission layers.

The PMI is used to determine a recommended precoding matrix from predefined codebooks.

The CQI is used to report the current channel quality, and the current channel quality may be determined based on the Signal-to-Interference-plus-Noise Ratio (SINR) estimated by the terminal device. The channel portion in the SINR is determined based on the non-zero power CSI-RS configured by the network device for channel measurement, and the interference portion is determined based on the Channel State Information-Interference Measurement (CSI-IM) configured by the network device or the non-zero power CSI-RS for interference measurement. The CQI is calculated based on reported RI and PMI.

The Reference Signal Receiving Power (RSRP) is used for reporting the RSRP, of the Synchronization Signal Block (SSB) or CSI-RS, corresponding to the fed-back index, so as to be used for the network side to determine the beam used for downlink transmission.

A Layer Indicator (LI) is used to report an index of a transmission layer associated with a Phase Tracking Reference Signals (PTRSs).

In some embodiments, the CSI report may have three reporting manners: the periodic CSI report, the semi-continuous CSI report, and the aperiodic CSI report. Referring to FIG. 4, the periodic CSI report is transmitted on a Physical Uplink Control Channel (PUCCH), and the CSI report configuration is configured by a Radio Resource Control (RRC), and the terminal device periodically reports the CSI to the network device after receiving the corresponding RRC configuration.

The semi-continuous CSI report may be transmitted on a PUCCH or a Physical Uplink Shared Channel (PUSCH). The CSI report configuration corresponding to the CSI transmitted on the PUCCH is pre-configured by the RRC signaling and activated or deactivated by Media Access Control (MAC) layer signaling. The CSI report configuration corresponding to the CSI transmitted on the PUSCH is dynamically indicated (activated or deactivated) by Downlink Control Information (DCI). After receiving the activation or indication signaling configured by the network device, the terminal device periodically transmits the CSI on the PUCCH or the PUSCH, and the terminal device stops reporting until the deactivation signaling is received.

The CSI report configuration corresponding to the aperiodic CSI report is also pre-configured by the RRC signaling, a part of the configurations are activated by the MAC layer signaling, and then the CSI report configuration used for CSI report is indicated by CSI trigger signaling in DCI. After receiving the CSI trigger signaling, the terminal device reports, in a one-shot report, the corresponding CSI on the scheduled PUSCH based on the indicated CSI report configuration.

When the great number of bits is carried in one piece of CSI, in order to preferentially transmit the important CSI information, one piece of CSI may be divided into two parts: CSI part 1 and CSI part 2. Referring to Table 1, the CSI part 1 and the CSI part 2 contain different information for different types of codebooks.

**Table 1**

| Codebook Type | CSI part 1 | CSI part 2 |
|---|---|---|
| Type I codebook | RI ,CRI,CQI for 1^{st} CW | PMI,CQI for 2^{nd} CW (RI>4) |
| Type II codebook | RI, CQI, number of non-zero wideband amplitude coefficient per layer (separately encoded) | PMI |

It should be noted that the number of bits of the CSI part 1 is fixed, and it is used to carry a small amount of important information such as RI and CQI. The number of bits of the CSI part 2 is determined according to the CSI part 1, and is used to carry information having a great number of bits such as PMI. When the code rate of the PUSCH/PUCCH carrying the CSI exceeds a certain value, the terminal device needs to perform a CSI omission on the CSI part 2, that is, the terminal device needs to omit a part or all of the information in the CSI part 2 to ensure the transmission performance of the PUSCH/PUCCH, so as to cause that the code rate does not exceed the maximum transmission code rate configured by the network device.

The information of the CSI part 1 is not omitted, and the terminal device may firstly omit, according to the priorities of the CSI reports, a part or all of the information in the CSI part 2 in the CSI having a lower priority.

In some embodiments, the priorities of CSI reports are determined based on the periodicity (periodic, semi-continuous or aperiodic) of CSI, the contents of the CSI reports (whether the RSRP is reported), the carriers (i.e., carrier indexes) corresponding to the CSI reports, and the IDs of the CSI report configurations. If the priority of the CSI is low, and the information of the CSI part 2 in the CSI needs to be omitted, the terminal device may firstly omit the CSI corresponding to the odd-numbered subbands in the CSI part 2, then omit the CSI corresponding to the even-numbered subbands, and finally omit the CSI of the wideband, and even may omit all the information of the entire CSI part 2 until the code rate satisfies the requirement. It may be seen that performing CSI omission on the CSI means that some information in CSI is omitted and is not sent. Omitting a part or all of the information in the CSI part 2 may cause the loss of channel information and affect the communication performance.

Based on this, the embodiments of the present disclosure provide a method for information compression. When the great number of bits is carried in the AI/ML-based first CSI and an uplink channel carrying the first CSI does not satisfy a limitation of a maximum transmission code rate, the terminal device may adjust the first model for generating the first CSI, process channel information by using the adjusted first model, to generate the compressed first CSI, thereby reducing the number of bits of the first CSI. In addition, the compressed first CSI may also be used for the network device to recover the complete channel information, and the compressed first CSI may represent the complete channel information. According to the methods for information compression provided by the embodiments of the present disclosure, the number of bits of the CSI can be reduced, and the integrity of channel information can be ensured, and further the communication performance of the system can be ensured.

In order to facilitate understanding of the technical solutions of the embodiments of the present disclosure, the technical solutions of the present disclosure will be described in detail below with reference to specific embodiments. The above related technologies may be, as optional solutions, arbitrarily combined with the technical solutions of the embodiments of the present disclosure, and all of them belong to the scope of protection of the embodiments of the present disclosure. The embodiments of the present disclosure include at least a part of the following contents.

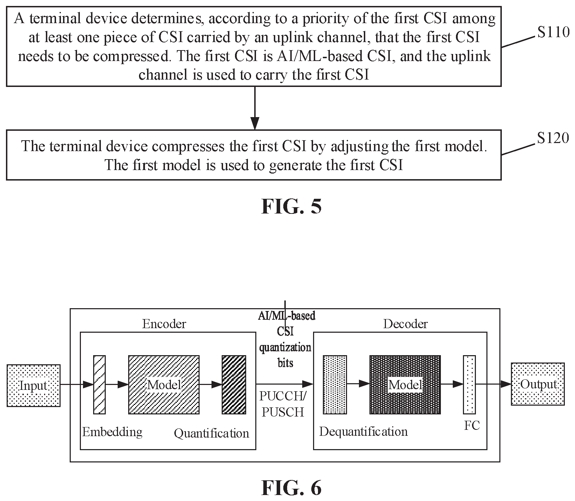

FIG. 5 illustrates a method for information compression according to an embodiment of the present disclosure. The method may include operation S110 and operation S120.

In the operation S110, a terminal device determines, according to a priority of the first CSI among at least one piece of CSI carried by an uplink channel, that the first CSI needs to be compressed. The first CSI is AI/ML-based CSI, and the uplink channel is used to carry the first CSI.

In operation S120, the terminal device compresses the first CSI by adjusting the first model. The first model is used to generate the first CSI.

It should be noted that the embodiments of the present disclosure may be applied to a scenario in which the terminal device reports the CSI to the network device. The terminal device sends the CSI to the network device through the uplink channel. The uplink channel here includes a PUCCH and/or a PUSCH.

It may be understood that the uplink channel may carry one or more pieces of CSI. The one or more pieces of CSI may include CSI obtained by an AI/ML manner, CSI obtained by a non-AI/ML manner, or may additionally include an RSRP obtained by the AI/ML manner, a RSRP obtained by the non-AI/ML manner, beam information obtained by the AI/ML manner, feedback information for model monitoring, and the like.

The CSI obtained based on the AI/ML manner may be CSI obtained based on the inference of the neural network model, CSI obtained based on the compression of the two-sides model (compressed CSI based on two-sides model), or CSI based on AI training, which is not limited in the embodiments of the present disclosure.

The CSI obtained based on the AI/ML manner may be corresponding CSI quantization bits that are inferred by the model after the obtained channel information (for example, feature vectors, beam information, delay information, etc.) is used by the terminal device to be an input of the model. Accordingly, a corresponding model may be set in the network device side, and the CSI quantization bits are taken as input to obtain corresponding channel information by inferring of the model.

Exemplarily, reference is made to the two-sides network model for CSI feedback illustrated in FIG. 6. A model for encoder is deployed on the terminal device side, and a corresponding model for decoder is deployed on the network device side. The terminal device outputs the CSI (typically such as PMI bits) obtained based on the AI/ML manner based on the model for the encoder, and then feeds back the CSI obtained based on the AI/ML manner to the network device through the uplink channel (PUSCH/PUCCH). The network device takes the CSI, obtained based on the AI/ML manner, fed back by the terminal device as the input of the model for the decoder, to output the channel information (such as a feature vector of each subband) corresponding to the input of the terminal device side, so as to be used for the downlink precoding. In addition, the terminal device needs to monitor the model performance, and reports it to the network device when the model performance is poor, so that the network device can update the model. Since the neural networks on both sides are matched, if the model is updated, the terminal device needs to be notified by signaling.

It may be understood that the CSI obtained based on the AI/ML manner is different from the CSI obtained based on the non-AI/ML manner. According to FIG. 2, FIG. 3, and FIG. 6, it may be seen that the connection manners of multiple neurons, the weights and the activation functions may be used by the model for encoder deployed on the terminal device side to fit the mapping relationship from the input (that is, the channel information) of the model for the encoder to the output (that is, the CSI obtained based on the AI/ML manner) of the model for the encoder. The model for decoder deployed on the network device side corresponds to the model for encoder deployed on the terminal device side. The connection manners of multiple neurons, the weights and the activation functions may be used by the model for the decoder to inversely fit from the input (that is, the CSI obtained based on AI/ML mode) of the decoder model to the output (that is, the channel information) of the model for the decoder.

It may be seen that the mapping between the channel information and the CSI quantization bits is realized by the model. As long as the model of the terminal device corresponds to the model of the network device, the CSI obtained based on the AI/ML manner may be transmitted between the terminal device and the network device to complete the CSI report. Conversely, if the model corresponding to the terminal device side is not deployed at the network device side, or if the model for the decoder deployed at the network device side does not correspond to the model for the encoder deployed at the terminal device side, the network device side cannot recover the channel information corresponding to the CSI obtained based on the AI/ML manner.

That is to say, the CSI obtained based on the AI/ML manner is obtained through model quantization, and different bit fields do not carry specific information. In fact, the CSI quantization bits of the CSI obtained based on the AI/ML manner are taken as a whole, and only when the network device processes the entire CSI quantization bits through a specific model, the channel information corresponding to the CSI quantization bits can be recovered.

The CSI obtained based on the non-AI/ML manner is bit information obtained by mapping channel information through a preset physical rule, and different bit fields carry specific channel information. For example, in the CSI obtained based on the non-AI/ML manner, the bits in the first half carry the PMIs, and the bits in the second half carry the CQIs. Alternatively, in the CSI obtained based on the non-AI/ML manner, bits 0 to N-1 may carry PMIs of odd-numbered subbands, bits N to 2N-1 may carry PMIs corresponding to even-numbered subbands, or the like.

It may be seen that performing CSI omission on the CSI obtained based on the non-AI/ML manner essentially is omitting specific channel information carried in CSI bits, which will cause the loss of channel information and affect the communication performance.

In the embodiments of the present disclosure, the first CSI may be any one of the at least one piece of AI/ML-based CSI carried by the uplink channel. The first CSI is generated based on the first model.

Exemplarily, the first model may be the model for the encoder deployed at the terminal device side in the embodiment described above.

Exemplarily, the first model may be trained and obtained by the terminal device through processes such as the construction of the data set, the training, the verification, and the testing.

Exemplarily, the first model may be trained and obtained by the terminal device in advance by manner(s) of the offline training and/or the online training.

In the embodiments of the present disclosure, when the terminal device determines that the first CSI needs to be compressed, the terminal device may adjust the first model to compress the first CSI.

It should be noted that compressing the first CSI means reducing the number of bits of the first CSI to cause that the uplink channel carrying the compressed first CSI can satisfy the limitation of the maximum transmission code rate.

In the embodiments of the present disclosure, the terminal device may compress the first CSI by adjusting the first model.

It may be understood that the terminal device may adjust the first model for generating the first CSI, and process the channel information by using the adjusted first model to output the compressed first CSI, so as to cause that the number of bits of the compressed first CSI is less than the original number of bits of the first CSI, and thus cause that the uplink information carrying the compressed first CSI satisfies the limitation of the maximum transmission code rate.

The purpose of adjusting the first model is to process the channel information by using the adjusted first model, and the number of bits of the generated compressed first CSI is less than the original number of bits of the first CSI, so as to cause that the uplink information carrying the compressed first CSI satisfies the limitation of the maximum transmission code rate.

From the above description, it may be seen that the connection manners of multiple neurons, the weights, and the activation functions may be used by the first model to fit the mapping relationship from the channel information to the first CSI. The adjusting the first model may be adjusting the mapping relationship to cause that the input channel information may be mapped to the CSI with fewer bits. Accordingly, the complete channel information can be recovered by the model corresponding to the adjusted first model deployed at the network device side based on the CSI with fewer bits.

That is, in the embodiments of the present disclosure, based on the CSI with fewer bits (that is, the compressed first CSI) output by the adjusted first model, the complete channel information can be recovered at the network device side. In other words, the complete channel information can still be represented by the compressed first CSI.

In the related art, the terminal device is usually based on the CSI obtained based on the non-AI/ML manner. As described above, different bit fields in the CSI obtained based on the non-AI/ML manner may carry specific channel information. In the related art, performing CSI omission on the CSI is essentially omitting information carrying a specific meaning in CSI bits, which will cause the loss of channel information and affect the communication performance.

The compression for the first CSI in the embodiments of the present disclosure is different from the CSI omission in the related art. In the embodiments of the present disclosure, the number of bits of the first CSI is reduced by adjusting the first model, and although the number of bits output by the adjusted first model is reduced, the original channel information is not omitted in the compression process. Accordingly, based on the compressed first CSI, the original channel information can still be recovered at the network device side. That is, compared to the CSI omission operation, in the embodiments of the present disclosure, the terminal device sends relatively complete information to the network device, thereby avoiding the loss of channel information.

It may be seen that the method for information compression provided in the embodiments of the present disclosure may be used as an alternative to the CSI omission. In the method for information compression according to the embodiments of the present disclosure, when the great number of bits is carried in the AI/ML-based first CSI, and the uplink channel carrying the first CSI does not satisfy the limitation of the maximum transmission code rate, the terminal device may adjust the first model for generating the first CSI, and process the channel information by using the adjusted first model to generate the compressed first CSI, thereby reducing the number of bits of the first CSI. In addition, the compressed first CSI may also be used for the network device to recover the complete channel information, and the compressed first CSI may represent the complete channel information. According to the method for information compression provided by the embodiments of the present disclosure, the number of bits of the CSI can be reduced, and the integrity of channel information can be ensured, and further the communication performance of the system can be ensured.

It should be noted that, in the embodiments of the present disclosure, the CSI obtained based on the AI/ML manner may also be referred to as the AI/ML-based CSI. The CSI obtained based on the AI/ML manner is equivalent to the AI/ML-based CSI, and may be replaced with the AI/ML-based CSI.

In some embodiments, the first CSI includes CSI obtained by AI/ML-based CSI compression and/or CSI obtained by AI/ML-based CSI prediction.

The CSI obtained by AI/ML-based CSI compression is essentially different from the compression for the first CSI in the embodiments of the present disclosure. The CSI obtained by AI/ML-based CSI compression refers to compressing measured channel information (such as feature vectors, beam information, delay information, etc.) into CSI quantization bits, and compression for the first CSI in the embodiments of the present disclosure refers to compressing the size of the CSI quantization bits, that is, decreasing/reducing the size of the CSI quantization bits. Further, CSI obtained by AI/ML-based CSI prediction refers to predicting future channel information based on AI/ML by using the channel information obtained from historical measurements.

In the embodiments of the present disclosure, the first CSI may include at least an AI/ML-based PMI, that is, indication information for obtaining a precoding matrix, or may include an AI/ML-based CQI and/or an AI/ML-based RI, which is not limited in the embodiments of the present disclosure.

It should be noted that the CSI obtained based on non-AI/ML may include CSI obtained based on a codebook, and/or, CSI obtained based on a non-codebook manner. The CSI obtained based on the non-codebook manner may include CSI obtained based on channel reciprocity.

In some embodiments, for the AI/ML-based CSI, three report manners: the periodic CSI report, the semi-continuous CSI report, and the aperiodic CSI report, are included.

In some embodiments, the first CSI may include a CSI part 1 and a CSI part 2. The compression for the first CSI in the embodiments of the present disclosure is actually to compresses the CSI part 2 of the first CSI. That is, the terminal device may input the CSI part 2 of the first CSI to the adjusted first model for processing, and take the output result of the adjusted first model and the CSI part 1 as the compressed first CSI.

In some embodiments, the effect of adjusting the first model may be to select an appropriate number of output bits of the CSI from multiple candidate number of output bits of the CSI, to cause that the number of bits of the compressed first CSI is less than the original number of bits of the first CSI, and the uplink information carrying the compressed first CSI satisfies the limitation of the maximum transmission code rate.

Exemplarily, adjusting the first model may be switching the first model to another model with a less number of output bits, or setting the current number of output bits of the first model to a less number of output bits, or compressing the input information of the first model to cause that the number of output bits is less.

It should be noted that there are many manners for adjusting the first model, and by adjusting the first model, the number of bits of the compressed first CSI is less than the original number of bits of the first CSI, and uplink information carrying the compressed first CSI satisfies the limitation of the maximum transmission code rate, and all of manners for adjusting the first model belong to the scope of protection of the present disclosure.

In some embodiments, when the code rate of the uplink channel is higher than the maximum transmission code rate configured by the network device, the terminal device may determine whether the first CSI needs to be compressed according to the priority order of the first CSI among the at least one piece of CSI carried by the uplink channel.

In some embodiments, in a case that the code rate of the uplink channel is higher than the maximum transmission code rate configured by the network device, and the first CSI is the lowest priority CSI among the at least one piece of CSI (or referred to as un-omitted CSI) carried by the uplink channel, the terminal device may determine to compress the first CSI.

That is, when the code rate of the uplink channel is higher than the maximum transmission code rate configured by the network device, the terminal device may select to compress the CSI having the lowest priority among one or more pieces of CSI currently carried by the uplink channel.

It is noted that, in some embodiments, the manner for determining the priority of the AI/ML-based CSI may be the same as the manner for determining the priority of CSI in the related art. For example, the priority of the CSI is determined based on the periodicity (the periodic, the semi-continuous, or the aperiodic) of the CSI, the carrier (i.e., the carrier index) corresponding to the CSI report, and the ID of the CSI report configuration.

In other embodiments, a new manner for determining the priority may also be introduced to determine the priority of the AI/ML-based CSI. Exemplarily, the priority of the first CSI among the at least one piece of CSI carried by the uplink channel is determined based on one or more of following: a priority of AI/ML-based CSI being higher than a priority of CSI obtained based on a non-AI/ML manner; the priority of the AI/ML-based CSI being same as the priority of the CSI obtained based on the non-AI/ML manner; the priority of the AI/ML-based CSI being lower than the priority of the CSI obtained based on the non-AI/ML manner; the priority of the AI/ML-based CSI being lower than a priority of a RSRP obtained based on the non-AI/ML manner; the priority of the AI/ML-based CSI being lower than a priority of AI/ML-based RSRP report; the priority of the AI/ML-based CSI being lower than a priority of AI/ML-based beam information; the priority of the AI/ML-based CSI being lower than a priority of feedback information for model monitoring; or model information of the first model. The priority of the AI/ML-based CSI and the priority of the CSI obtained based on the non-AI/ML manner are determined based on corresponding serving cell identification information and/or CSI report configuration identification information.

In one possible implementation, in a case that the AI/ML-based CSI is introduced into the communication system, a new priority order may be defined according to the AI/ML-based CSI.

It may be defined that the priority of the AI/ML-based CSI is higher than the priority of the CSI obtained based on the non-AI/ML manner, or the priority of the AI/ML-based CSI is same as the priority of the CSI obtained based on the non-AI/ML manner, or the priority of the AI/ML-based CSI is lower than the priority of the CSI obtained based on the non-AI/ML manner.

Further, it may be defined that the priority of the AI/ML-based CSI is lower than the priority of the RSRP obtained based on the non-AI/ML manner, the priority of the AI/ML-based CSI is lower than the priority of AI/ML-based RSRP report, the priority of the AI/ML-based CSI is lower than the priority of AI/ML-based beam information, and the priority of the AI/ML-based CSI is lower than the priority of feedback information for model monitoring.

It is noted that the terminal device may monitor the current model corresponding to the AI/ML-based CSI, and report feedback information of the current model monitoring to the network device. Exemplarily, the feedback information for model monitoring may include, but is not limited to, a BLock Error Rate (BLER) estimation, a throughput estimation, a vector correlation estimation, etc., of the current model, a model failure report, a model update request, and the like, which is not limited in the embodiment of the present disclosure.

It should be noted that when the priority orders of the two pieces of CSI are the same in the predefined priority orders, or priority orders configured by the network device, the priorities of the two pieces of CSI may be further determined based on the serving cell identification information and/or the CSI report configuration identification information corresponding to each CSI.

Exemplarily, when the priority of the AI/ML-based CSI is same as the priority of the CSI obtained based on the non-AI/ML manner, the priority orders of the AI/ML-based CSI and the CSI obtained based on the non-AI/ML manner may be further determined according to the serving cell ID and/or the CSI report configuration identification information corresponding to the AI/ML-based CSI, and the serving cell ID and/or the CSI report configuration identification information corresponding to the CSI obtained based on the non-AI/ML manner.

Each piece of serving cell identification information and/or each CSI report configuration identification information may correspond to one CSI priority. Different serving cell identification information and/or different CSI report configuration identification information may correspond to different CSI priorities.

In some embodiments, the CSI priority corresponding to each piece of serving cell identification information and/or each piece of CSI report configuration identification information may be predefined, or configured by the network device, which is not limited in the embodiments of the present disclosure.

It should be noted that the new priority order introduced above may be predefined, or may be configured to the terminal device through the network device, which is not limited in the embodiments of the present disclosure.

In another possible implementation, the priority of the AI/ML-based CSI may also be related to the model information for generating the CSI. The model information may include one or more of following: a function of the model, a type of the model, or identification information of the model.

That is, for two pieces of CSI that are based on AI/ML, CSI generated by using different models/different types of models/models with different functions may have different priorities. In other words, different models/different types of models/models with different functions correspond to different CSI priorities.

Exemplarily, the models may be classified into low-precision models and high-precision models. The priority of the AI/ML-based CSI generated by using the high-precision model is higher than the priority of the CSI obtained based on the codebook. The priority of the AI/ML-based CSI generated by using the low-precision model is lower than he priority of the CSI obtained based on the codebook. In this case, the priority of the AI/ML-based CSI generated by using the high-precision model is higher than the priority of the AI/ML-based CSI generated by using the low-precision model.

Exemplarily, the priorities may be distinguished based on the model IDs, The priority of the AI/ML-based CSI generated by using the model corresponding to the first model ID is higher than the priority of the AI/ML-based CSI generated by using the model corresponding to the second model ID. Here, it is assumed that each model has a model ID, that is, there is a one-to-one correspondence between the model and the model ID.

Exemplarily, the network device may pre-configure the first model ID set and the second model ID set. The priorities of the AI/ML-based CSI generated by the models corresponding to the first model ID set are higher than the priorities of the AI/ML-based CSI generated by the models corresponding to the second model ID set. Alternatively, the priorities of the AI/ML-based CSI generated by the models corresponding to the first model ID set are higher than the priorities of the CSI obtained based on the codebook, and the priority of the CSI obtained based on the codebook is higher than the priorities of the AI/ML-based CSI generated by the models corresponding to the second model ID set.

It should be noted that CSI priorities corresponding to different models/models of different types/models with different functions may be predefined, or configured by the network device, which is not limited in the embodiments of the present disclosure.

It may be understood that in the embodiments of the present disclosure, the first CSI is the AI/ML-based CSI. When determining the first CSI, the terminal device may determine the priority of the first CSI according to the above priority order and/or the model information of the first model.

In some embodiments, the terminal device may obtain the priority of the first CSI by combining the manner for determining the CSI priority in the related art and the above manner for determining the CSI priority.

Exemplarily, the terminal device may firstly determine the priority of the first CSI according to the periodicity of the CSI. If it is determined that the priority of the first CSI is the same as the priority of other CSI based on periodicity, the priority of the first CSI generated based on AI/ML may be further determined according to the above predefined priority order, or the priority order configured by the network, and/or the model information of the first model. If the priorities of the first CSI and the other CSI cannot be determined, the terminal device may further determine the priority orders of the first CSI and the other CSI according to the carriers, the serving cell IDs, and the CSI report configuration IDs corresponding to the first CSI and the other CSI.

It should be noted that the manner for determining the priority of the AI/ML-based CSI may be combined with the manner for determining the CSI priority in the related art by other methods, which will not be described one by one in the embodiments of the present disclosure.

Thus, in the methods provided by the embodiments of the present disclosure, the terminal device may determine the priority of the AI/ML-based CSI according to the predefined priority order, or priority order configured by the network device, and/or the model information of the first model, thus the manner for determining the priority of the AI/ML-based CSI is clarified, and the normal operation of the communication system is ensured.

In an embodiment of the present disclosure, the operation S120 that the terminal device compresses the first CSI by adjusting the first model may be implemented by one or more of the following three manners.

The first model is switched to the second model, and channel information is processed through the second model to obtain the compressed first CSI. The number of output bits of the second model is less than the number of output bits of the first model.

An initial number of output bits of the first model is adjusted to a target number of output bits, and the channel information is processed through the first model with the adjusted numbers of output bits, to obtain the compressed first CSI. The target number of output bits is less than the initial number of output bits.

The number of output bits of the first model is reduced by compressing channel information input to the first model, to obtain the compressed first CSI.

In one possible implementation, the terminal device may support multiple candidate models. The model structures and/or model parameters corresponding to different candidate models may be different. Accordingly, the numbers of output bits of different candidate models may be different.

It should be understood that the terminal device may use multiple candidate models to generate the CSI. The input information of each candidate model may be channel information (such as feature vectors, beam information, delay information, etc.) obtained by measuring by the terminal device, and CSI quantization bits may be obtained by each candidate model based on the input channel information.

It should be noted that the multiple candidate models supported by the terminal device may be configured/indicated by the network device or may be predefined, which is not limited in the embodiments of the present disclosure.

It should also be noted that, in the embodiments of the present disclosure, if the parameters and structures of the two models are completely the same, and only the quantization granularity or quantization method (such as vector quantization or scalar quantization) of the CSI bits are different, the two models are still regarded as the same model.

In this implementation, if it is determined that the first CSI needs to be compressed, the terminal device may select the second model whose the number of output bits is less than the number of output bits of the first model from multiple supported candidate models, switch the currently used first model to the second model, and process channel information input by the terminal device through the second model, thereby reducing the number of output bits of the model and the code rate of the corresponding uplink channel, thereby causing that the code rate of the uplink channel carrying the compressed first CSI is less than or equal to the maximum transmission code rate configured by the network device. In this way, it can be avoided that the entire CSI report is omitted, and the performance of the entire communication system can be improved.

In an embodiment, the second model is a candidate model, among the multiple candidate models, causing that a code rate of an uplink channel carrying the compressed first CSI is less than or equal to a maximum transmission code rate configured by the network device.

It may be understood that the terminal device may select any one candidate model, from the multiple candidate models, causing that the code rate of the uplink channel carrying the compressed first CSI is less than or equal to the maximum transmission code rate configured by the network device. In other words, the second model is any one candidate model, among the multiple candidate models, causing that the code rate of the uplink channel carrying the compressed first CSI is less than or equal to the maximum transmission code rate configured by the network device.

Exemplarily, the network device may pre-configure four models, and the numbers of output bits are 60, 80, 100, and 120 bits, respectively. It is assumed that the first model currently used by the terminal device is a model with 120 output bits, and the first CSI generated by the first model needs to be compressed. The terminal device may select, from the other three models, any one model that causes the uplink channel (PUSCH or PUCCH) to satisfy the limitation of the maximum transmission code rate (that is, the code rate of the uplink channel is less than or equal to the maximum transmission code rate configured by the network device). It is assumed that the limitation of the maximum transmission code rate is satisfied only when the number of output bits is less than 90. The terminal device may select any one model with the number of output bits being 60 or 80 as the second model. In this case, the terminal device can replace the first model with the second model. Although reducing the number of output bits will affect the accuracy of CSI report, it is avoided that the entire CSI report is omitted, and the performance of the entire system is improved.

In another embodiment, the second model is a candidate model, among the multiple candidate models, causing that the code rate of the uplink channel carrying the compressed first CSI is less than or equal to the maximum transmission code rate configured by the network device, and having a maximum number of output bits.

It may understood that, in order to ensure the accuracy of the CSI report as much as possible, the terminal device may select, from multiple candidate models, a candidate model as the second model. The candidate model causes that the code rate of the uplink channel carrying the compressed first CSI is less than or equal to the maximum transmission code rate configured by the network device, and has the maximum number of output bits.

Exemplarily, the network device may pre-configure four models, and the numbers of output bits are 60, 80, 100, and 120 bits, respectively. It is assumed that the first model currently used by the terminal device is a model with 120 output bits, and the first CSI generated by the first model needs to be compressed. The terminal device may select, from the other three supported models, a model, causing that the uplink channel (PUSCH or PUCCH) satisfies the limitation of the maximum code rate, and having the maximum number of output bits. It is assumed that the limitation of the maximum code rate is satisfied only when the number of output bits is less than 90, the model with the number of output bits of 80 may be selected as the second model. In this case, the terminal device may replace the first model with the second model. Although reducing the number of output bits will affect the accuracy of CSI report, it is avoided that the entire CSI report is omitted, and the performance of the entire system is improved.

In another possible implementation, the first model may support multiple numbers of output bits. The number of output bits of the first model may be switched as required.

It is noted that the multiple output bits supported by the first model may be multiple different numbers of PMI output bits and/or CQI output bits supported by the first model.

It should also be noted that in the embodiments of the present disclosure, the first model supporting the multiple numbers of output bits may be understood that the number of output bits of the first model may be controlled by the configuration when training the model, and the model has generalization for different numbers of output bits. The multiple numbers of output bits supported by the first model means that the model itself supports different output sizes, instead of adjusting the size of the number of the output bits by adjusting the quantization granularity or quantization method of CSI bits.

It should also be noted that the multiple numbers of output bits supported by the first model are predefined, or configured by the network device. The multiple numbers of output bits supported by the first model may be reported by the terminal device to the network device, which is not limited in the embodiments of the present disclosure.

In this embodiment, if it is determined that the first CSI needs to be compressed, the terminal device may adjust the initial number of output bits currently used by the first model to a target number of output bits with a less number of output bits, thereby processing the channel information through the adjusted first model to obtain the compressed first CSI. That is, the terminal device may select the less number of output bits from multiple numbers of output bits supported by the first model, thereby reducing the number of output bits of the model and the corresponding code rate of the uplink channel, and further causing that the code rate of the uplink channel carrying the compressed first CSI is less than or equal to the maximum transmission code rate configured by the network device. In this way, it can be avoided that the entire CSI report is omitted, and the performance of the entire communication system can be improved.

It should be noted that the multiple numbers of output bits supported by the first model may be multiple different numbers of PMI bits and/or CQI bits supported by the first model. Accordingly, the terminal device may only adjust the number of PMI output bits to realize CSI omission, the terminal device may only adjust the number of CQI output bits to realize CSI compression, or the terminal device may simultaneously adjust the number of PMI output bits and the number of CQI output bits to realize CSI compression, which is not limited by the embodiments of the present disclosure.

In an embodiment, the target number of output bits is the number of output bits, among the multiple numbers of output bits supported by the first model, causing that a code rate of the uplink channel carrying the compressed first CSI is less than or equal to a maximum transmission code rate configured by the network device.

It may be understood that the terminal device may select, from the multiple numbers of output bits supported by the first model, any one number of output bits causing that the code rate of the uplink channel carrying the compressed first CSI is less than or equal to the maximum transmission code rate configured by the network device as the target number of output bits, ,. In other words, the target number of output bits is any one number of output bits, among the multiple numbers of output bits supported by the first model, causing that the code rate of the uplink channel carrying the compressed first CSI is less than or equal to the maximum transmission code rate configured by the network device.

Exemplarily, the first model may support four different numbers of output bits (for example, the number of PMI output bits/the number of CQI output bits), which are 60, 70, 100, 120 bits, respectively. It is assumed that the number of output bits of the first model currently used by the terminal device is 100, and the first CSI generated by the first model needs to perform CSI compression, the terminal device may select, from the other three numbers of output bits, any one number of output bits that causing the uplink channel (PUSCH or PUCCH) to satisfy the limitation of the maximum code rate. It is assumed that the limitation of the maximum code rate is satisfied only when the number of output bits is less than 80. The terminal device may select 60 bits or 70 bits as the number of output bits of the first model. Although reducing the number of output bits will affect the accuracy of CSI report, it can be avoided that the entire CSI report is omitted, and the performance of the entire system is improved.

In another embodiment, the target number of output bits is the number of output bits, among the multiple numbers of output bits, causing that the code rate of the uplink channel carrying the compressed first CSI is less than or equal to the maximum transmission code rate configured by the network device, and having a maximum number of output bits.

It may be understood that, in order to ensure the accuracy of the CSI uplink as much as possible, the terminal device may select, from the multiple numbers of output bits supported by the first model, the number of output bits, causing that the code rate of the uplink channel carrying the compressed first CSI is less than or equal to the maximum transmission code rate configured by the network device, and having a maximum number of output bits.

Exemplarily, the first model may support four different numbers of output bits (for example, the number of PMI output bits/the number of CQI output bits), which are 60, 70, 100, 120 bits, respectively. It is assumed that the number of output bits of the first model currently used by the terminal device is 100, and the first CSI report generated by the first model needs to perform CSI compression. The terminal may select, from the other three numbers of output bits, the maximum number of output bits that causes the uplink channel (PUSCH or PUCCH) to satisfy the limitation of the maximum code rate. It is assumed that the limitation of the maximum code rate is satisfied only when the number of output bits is less than 80. The terminal device may select 70 bits as the number of output bits of the first model. Although reducing the number of output bits will affect the accuracy of CSI report, it can be avoided that the entire CSI report is omitted, and the performance of the entire system is improved.

In another possible implementation, the terminal device may reduce the number of output bits of the first model by compressing the channel information input to the first model to obtain the compressed first CSI. That is, the terminal device may adjust the number of output bits of the first model by restricting the input of the first model to achieve compression for the first CSI.

It should be noted that the input information of the model has a correspondence relationship with the number of output bits of the model, and the more the input information of the model is, the more the number of output bits is.

It may be understood that in the embodiments of the present disclosure, the input information of the first model may be channel information (for example, feature vectors, beam information, delay information, etc.) obtained by measuring by the terminal device. When the channel information is less, the required PMI quantization bits are also less, thus the number of output bits can be reduced. Therefore, the number of output bits of the first model can be reduced by reducing or restricting the input information of the first model, thereby reducing the code rate of the uplink channel, and further causing that the code rate of the uplink channel carrying the compressed first CSI is less than or equal to the maximum transmission code rate configured by the network device. In this way, it can be avoided that the entire CSI report is omitted, and the performance of the entire communication system can be improved.

In some embodiments, reducing the number of output bits of the first model by compressing the channel information output by the first model, to obtain the compressed first CSI may include the following operation. A part of channel information is taken as an input of the first model to obtain the compressed first CSI.

The part of the channel information includes one or more of following: channel information of a part of subbands; channel information of wideband; a part of beam information; or a part of delay information.

In one embodiment, the terminal device may only take the channel information of a part of the subbands as the input of the first model. For example, the terminal device may take only the channel information of the even-numbered subbands as the input of the first model (that is, the information of the odd-numbered subbands is omitted), or take only the channel information of the odd-numbered subbands as the input of the first model (that is, the information of the even-numbered subbands is omitted). The channel information of the subband may be a feature vector of the subband, a beam of the subband, a phase of the subband, or the like, which is not limited in the embodiments of the present disclosure.

In an embodiment, the terminal device may only take the channel information of the wideband as the input of the first model. That is, the terminal device may not take the channel information of the subbands as the input of the model. The channel information of the wideband may be a feature vector of the wideband, beam information of the wideband, delay information of the wideband, or the like, which is not limited in the embodiments of the present disclosure.

In an embodiment, the terminal device may take the part of beam information as the input of the first model. That is, the terminal device may not take all of the beam information as the input of the model, but may select a part of the beam information as the output of the first model, or sample the beam information and take the sampled beam information as the input of the first model.

In one embodiment, the terminal device may only take a part of delay information as the input of the first model. That is, the terminal device does not take all of the channel delay information as the input of the model, but only selects a part of the channel delay information as the input of the first model.

It should be noted that which content is included in the part of the channel information can be agreed between the terminal device and the network device. For example, it may be agreed by the terminal device and the network device that one or more of the following: the channel information of a part of subbands, the channel information of the wideband, the part of beam information, or the part of delay information is (are) taken as the input of the first model. Further, which content is included in the part of channel information is selected by the terminal device according to the implementation. For example, the terminal device may select to take one of following: the channel information of a part of subbands, the channel information of the wideband, the part of beam information, and the part of delay information, as the input of the first model, which is not limited in the embodiments of the present disclosure.

It should also be noted that the above three compression implementation manners may be implemented in combination.

In an example, if it is determined that the first CSI needs to be compressed, the terminal device may select, from multiple supported candidate models, the second model whose number of output bits is less than the number of output bits of the first model, and simultaneously select an appropriate number of output bits from multiple numbers of output bits supported by the second model to process channel information to generate the compressed first CSI, thereby reducing the number of output bits of the model and the corresponding code rate of the uplink channel, and further causing that the code rate of the uplink channel carrying the compressed first CSI is less than or equal to the maximum transmission code rate configured by the network device. In this way, the number of bits of the first CSI can be further compressed, it can be avoided that the entire CSI report is omitted, and the performance of the entire communication system can be improved.

In an example, if it is determined that the first CSI needs to be compressed, the terminal device may select, from multiple supported candidate models, the second model whose the number of output bits is less than the number of output bits of the first model, and simultaneously compress channel information input to the second model to obtain the compressed first CSI, thereby reducing the number of output bits of the model and the corresponding code rate of the uplink channel, and further causing that the code rate of the uplink channel carrying the compressed first CSI is less than or equal to the maximum transmission code rate configured by the network device. In this way, the number of bits of the first CSI can be further compressed, it can be avoided that the entire CSI report is omitted, and the performance of the entire communication system can be improved.

In an example, if it is determined that the first CSI needs to be compressed, the terminal device may select, from multiple numbers of output bits supported by the first model, a target number of output bits with a less number of output bits, and simultaneously compress the channel information input to the first model to obtain the compressed first CSI, thereby reducing the number of output bits of the model and the corresponding code rate of the uplink channel, and further causing that the code rate of the uplink channel carrying the compressed first CSI is less than or equal to the maximum transmission code rate configured by the network device. In this way, the number of bits of the first CSI can be further compressed, it can be avoided that the entire CSI report is omitted, and the performance of the entire communication system can be improved.

In an example, if it is determined that the first CSI needs to be compressed, the terminal device may select, from multiple supported candidate models, the second model whose the number of output bits is less than the number of output bits of the first model, and simultaneously select an appropriate number of output bits from multiple numbers of output bits supported by the second model, and compress the channel information input to the second model to obtain the compressed first CSI, thereby reducing the number of output bits of the model and the corresponding code rate of the uplink channel, and further causing that the code rate of the uplink channel carrying the compressed first CSI is less than or equal to the maximum transmission code rate configured by the network device. In this way, the number of bits of the first CSI can be further compressed, it can be avoided that the entire CSI report is omitted, and the performance of the entire communication system can be improved.

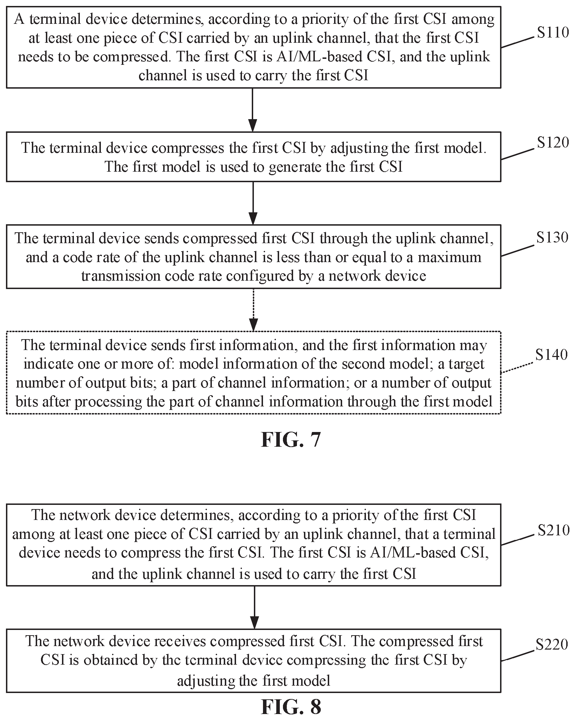

In an embodiment of the present disclosure, referring to FIG. 7, the method for information compression provided by the embodiments of the present disclosure may further include the following operation S130.

In operation S130, the terminal device sends the compressed first CSI through the uplink channel. A code rate of the uplink channel is less than or equal to a maximum transmission code rate configured by a network device.

It may be understood that after the terminal device compresses the first CSI by adjusting the first model, the compressed first CSI may be sent to the network device through the uplink channel. The code rate of the uplink channel carrying the compressed first CSI is less than or equal to the maximum transmission code rate configured by the network device.

Alternatively, in some embodiments, referring to FIG. 7, the method for information compression provided by the embodiments of the present disclosure may further include the following operation S140.

In operation S140, the terminal device sends the first information. The first information may indicate one or more of following: model information of the second model; a target number of output bits; a part of channel information; or the number of output bits after processing the part of channel information through the first model.

It should be noted that, after the terminal device performs CSI omission on the first CSI by adjusting the first model, the terminal device may report related information for adjusting the first model to the network device, to cause the network device to determine the number of bits of the compressed first CSI carried in the uplink information based on the reported related information, to realize reception of the CSI.

It may be understood that if the terminal device selects to switch the first model to the second model and process the channel information through the second model to obtain the compressed first CSI, the terminal device may report the model information of the second model to the network device. The model information of the second model may be index information of the second model among the multiple candidate models supported by the terminal device, or may be identification information of the second model, which is not limited in the embodiments of the present disclosure. In this way, the network device can determine the number of bits of the compressed first CSI carried in the uplink information according to the model information of the second model reported by the terminal device, so as to realize the reception of the CSI.

If the terminal device selects to adjust the initial number of output bits of the first model to the target number of output bits, and process the channel information through the first model with the adjusted numbers of output bits, to obtain the compressed first CSI, the terminal device may report the selected target number of output bits to the network device. The first information may indicate a specific value of the target number of output bits, or may indicate index information of the target number of output bits among the multiple numbers of output bits supported by the first model, which is not limited in the embodiments of the present disclosure. In this way, the network device can determine the number of bits of the compressed first CSI carried in the uplink information according to the target number of output bits reported by the terminal device, so as to realize the reception of the CSI.

If the terminal device reduces the number of output bits of the first model by compressing channel information input to the first model, to obtain the compressed first CSI, the terminal device may report the selected part of channel information and/or the number of output bits after the part of channel information is processed by the first model to the network device.

In an embodiment, if the content included in the part of channel information is agreed between the terminal device and the network device, the terminal device further needs to report the number of output bits after the part of channel information is processed by the first model to the network device. In this way, the network device can determine the size of the compressed first CSI according to the size of the number of output bits reported by the terminal device, so as to perform the corresponding reception of the CSI.

In an embodiment, if the content included in the part of channel information is selected by the terminal device according to the implementation, the terminal device may report the specific content of the part of channel information and/or the number of output bits after the part of channel information is processed by the first model to the network device. In this way, the network device may determine the size of the compressed first CSI according to the specific content of the part of channel information and/or the size of the number of output bits after the part of channel information is processed by the first model reported by the terminal device, so as to perform the corresponding reception of the CSI.

In an embodiment of the present disclosure, the compressed first CSI may include the CSI part 1 and the CSI part 2. The number of bits of the CSI part 1 is fixed, and the number of bits of the CSI part 2 is determined according to a content specified by the CSI part 1.

The above first information may be carried by the CSI part 1.

It should be noted that the compression for the first CSI in the embodiments of the present disclosure is essentially the compression for the CSI part 2 of the first CSI. The CSI part 1 of the compressed first CSI is still the CSI part 1 of the original first CSI. The CSI part 2 of the compressed first CSI refers to information after the CSI part 2 of the original first CSI is compressed. That is to say, the CSI part 1 of the compressed first CSI is the same information as the CSI part 1 of the original first CSI. The number of bits of CSI part 1 of the compressed first CSI is fixed, and the CSI part 1 of the compressed first CSI is used to carry important information such as RI and CQI in the original first CSI.

It may be understood that the terminal device may report the related information for adjusting the first model to the network device through the CSI part 1.

In an embodiment of the present disclosure, the method for information compression provided by the embodiments of the present disclosure may further include the following operation.

The terminal device omits the first CSI in a case that at least one of following is satisfied.

The number of output bits of the second model is less than the first threshold.

A target number of output bits is less than the first threshold.

Any one candidate model among multiple candidate models supported by the terminal device causes that a code rate of the uplink channel carrying the compressed first CSI is greater than a maximum transmission code rate configured by a network device.

Any one number of output bits among multiple numbers of output bits supported by the first model causes that the code rate of the uplink channel carrying the compressed first CSI is greater than the maximum transmission code rate configured by the network device.

The terminal device compresses channel information input to the first model to cause that the code rate of the uplink channel carrying the compressed first CSI is greater than the maximum transmission code rate configured by the network device.

It may be understood that in some specific cases, the terminal device may directly omit the first CSI and not send the first CSI to the network device.

In an embodiment, the terminal device may omit the first CSI if the number of output bits of the second model selected by the terminal device is less than the first threshold. The first threshold may be a minimum requirement for the number of CSI bits (or referred to as CSI feedback accuracy). That is, if the number of output bits of the second model is too few to satisfy the requirement of the CSI feedback accuracy, the corresponding first CSI can be directly omitted, thereby saving overhead.

It is noted that when it is determined that the number of output bits of the second model is less than the first threshold value, the terminal device may not output the corresponding compressed first CSI by performing inference based on the second model, thereby reducing the operation complexity of the terminal device and improving the processing efficiency of the terminal device.

Similarly, if the target number of output bits selected by the terminal device is less than the first threshold (that is, the target number of output bits is too few to satisfy the requirement of CSI feedback accuracy), the terminal device may omit the first CSI.

It should be noted that, when it is determined that the selected target number of output bits is less than the first threshold, the terminal device may not output the corresponding compressed first CSI by performing inference based on the model, thereby reducing the operation complexity of the terminal device and improving the processing efficiency of the terminal device.

It should also be noted that the above first threshold may be predefined, or configured by the network device, which is not limited in the embodiments of the present disclosure.

In an embodiment, the terminal device may omit the first CSI when any one candidate model among the multiple candidate models supported by the terminal device causes that the code rate of the uplink channel carrying the compressed first CSI is greater than the maximum transmission code rate configured by the network device. That is to say, if the numbers of output bits of all candidate models supported by the terminal device cannot cause that the uplink channel (PUCCH and/or PUSCH) carrying the compressed first CSI satisfies the limitation of the maximum code rate, the terminal device may omit the first CSI.

Exemplarily, the network device may pre-configure four models, and the numbers of output bits are 60, 80, 100, and 120 bits, respectively. If the minimum number of output bits among the numbers of output bits of the four candidate models cannot satisfy the limitation of the maximum transmission code rate of the uplink channel (for example, the limitation of the maximum code rate is satisfied only when the number of output bits is less than 60), the first CSI may be directly omitted. In this case, the terminal device does not need to output the corresponding compressed first CSI by performing inference based on the model.

In an embodiment, the terminal device may omit the first CSI when any one number of output bits among the multiple numbers of output bits supported by the first model causes that the code rate of the uplink channel carrying the compressed first CSI is greater than the maximum transmission code rate configured by the network device. That is to say, if all the numbers of output bits supported by the first model cannot cause that the uplink channel carrying the compressed first CSI satisfies the limitation of the maximum code rate, the terminal device omits the first CSI.

Exemplarily, the first model may support four different numbers of output bits (for example, the number of PMI output bits/the number of CQI output bits), which are 60, 70, 100, 120 bits, respectively. If the minimum number of output bits among the above four different numbers of output bits cannot satisfy the limitation of the maximum transmission code rate of the uplink channel (for example, the limitation of the maximum code rate is satisfied only when the number of output bits is less than 60), the corresponding CSI report may be directly omitted. In this case, the terminal device does not need to output the corresponding compressed first CSI by performing inference based on the model.

In an embodiment, the terminal device may omit the first CSI when the terminal device compresses channel information input to the first model to cause that the code rate of the uplink channel carrying the compressed first CSI is greater than the maximum transmission code rate configured by the network device. That is to say, if no matter which compression manner the terminal device uses to compress the channel information input to the first model cannot cause that the uplink channel carrying the compressed first CSI satisfies the limitation of the maximum code rate, the terminal device omits the first CSI.

In summary, in the method for information compression provided by the embodiments of the present disclosure, when the priority of the AI/ML-based first CSI is low and the CSI omission needs to be performed, the number of CSI bits can be reduced by adjusting the first model, thereby avoiding performance loss caused by directly omitting the entire CSI. When the compression reaches a certain threshold (less than the first threshold) and the CSI report is unavailable, the first CSI can be directly omitted to avoid unnecessary CSI feedback.

The communication method according to the embodiments of the present disclosure has been described in detail above from the perspective of the terminal device with reference to FIG. 6, and the communication method according to the embodiments of the present disclosure will be described in detail below from the perspective of the network device with reference to FIG. 8. It should be understood that the part of operations performed by the network device correspond to the part of operations performed by the terminal device, and repetitive descriptions will be omitted hereinafter as appropriate for the sake of brevity.

FIG. 8 illustrates a method for information compression according to an embodiment of the present disclosure. The method may include the operations S210 and S220.

In the operation S210, the network device determines, according to a priority of the first CSI among at least one piece of CSI carried by an uplink channel, that a terminal device needs to compress the first CSI. The first CSI is AI/ML-based CSI, and the uplink channel is used to carry the first CSI.

In operation S220, the network device receives the compressed first CSI. The compressed first CSI is obtained by the terminal device compressing the first CSI by adjusting the first model.

It may be understood that the network device needs to perform an operation similar to that of the terminal device to determine whether the terminal device needs to compress the first CSI and the number of output bits of the compressed first CSI, and thereby correctly performing the reception of the CSI feedback information.

In the embodiments of the present disclosure, the compressed first CSI is sent through the uplink channel, and a code rate of the uplink channel is less than or equal to the maximum transmission code rate configured by the network device.

It should be noted that the first CSI may include CSI obtained by AI/ML-based CSI compression and/or CSI obtained by AI/ML-based CSI prediction.

It should be further noted that after receiving the compressed first CSI sent by the terminal device, the network device may take the compressed first CSI as an input of the model of the decoder, thereby restoring the actual channel information, such as feature vectors of subbands.

In some embodiments, the priority of the first CSI among the at least one piece of CSI carried by the uplink channel is determined based on one or more of following: a priority of AI/ML-based CSI being higher than a priority of CSI obtained based on a non-AI/ML manner; the priority of the AI/ML-based CSI being same as the priority of the CSI obtained based on the non-AI/ML manner; the priority of the AI/ML-based CSI being lower than the priority of the CSI obtained based on the non-AI/ML manner; the priority of the AI/ML-based CSI being lower than a priority of a RSRP obtained based on the non-AI/ML manner; the priority of the AI/ML-based CSI being lower a priority of AI/ML-based RSRP; the priority of the AI/ML-based CSI being lower than a priority of AI/ML-based beam information; the priority of the AI/ML-based CSI being lower than a priority of feedback information for model monitoring; or model information of the first model. The priority of the AI/ML-based CSI and the priority of the CSI obtained based on the non-AI/ML manner are determined based on corresponding serving cell identification information and/or CSI report configuration identification information.

In some embodiments, the model information may include one or more of following: a function of the first model, a type of the first model, or identification information of the first model.

In some embodiments, the CSI obtained based on the non-AI/ML manner includes: CSI obtained based on a codebook, and/or, CSI obtained based on a non-codebook manner.

In some embodiments, in a case that a code rate of the uplink channel is higher than a maximum transmission code rate configured by the network device, and the first CSI is CSI having a lowest priority among the at least one piece of CSI carried by the uplink channel, the network device may determine that the first CSI is compressed by the terminal device.

In some embodiments, the compressed first CSI is obtained through one or more of the following three manners.

The compressed first CSI is obtained by the terminal device switching the first model to the second model and processing channel information through the second model. The number of output bits of the second model is less than a number of output bits of the first model.

The compressed first CSI is obtained by the terminal device adjusting an initial number of output bits of the first model to a target number of output bits, and processing the channel information through the first model with the adjusted numbers of output bits. The target number of output bits is less than the initial number of output bits.

The compressed first CSI is obtained by the terminal device reducing the number of output bits of the first model by compressing channel information input to the first model.

In some embodiments, the terminal device supports multiple candidate models. The multiple candidate models include at least the first model and the second model.

The second model is a candidate model, among the multiple candidate models, causing that a code rate of an uplink channel carrying the compressed first CSI is less than or equal to a maximum transmission code rate configured by the network device.

In some embodiments, the second model is a candidate model, among the multiple candidate models, causing that the code rate of the uplink channel carrying the compressed first CSI is less than or equal to the maximum transmission code rate configured by the network device, and having a maximum number of output bits.

It should be noted that the multiple candidate models are predefined, or configured by the network device.

In some embodiments, the first model supports multiple numbers of output bits, and the multiple numbers of output bits include at least the initial number of output bits and the target number of output bits.

The target number of output bits is a number of output bits, among the multiple numbers of output bits, causing that a code rate of an uplink channel carrying the compressed first CSI is less than or equal to a maximum transmission code rate configured by the network device.

In some embodiments, the target number of output bits is a number of output bits, among the multiple numbers of output bits, causing that the code rate of the uplink channel carrying the compressed first CSI is less than or equal to the maximum transmission code rate configured by the network device, and having a maximum number of output bits.

It should be noted that the multiple numbers of output bits supported by the first model are predefined, or configured by the network device.

In some embodiments, the compressed first CSI being obtained by reducing the number of output bits of the first model by compressing channel information input to the first model includes the following operation.

A part of channel information is input into the first model to obtain the compressed first CSI. The part of channel information includes one or more of following: channel information of a part of subbands; channel information of wideband; a part of beam information; or a part of the delay information.

In some embodiments, the method for information compression according to the embodiments of the present disclosure may further include the following operation.

The network device receives the first information. The first information indicates one or more of following: model information of the second model; a target number of output bits; a part of channel information; or the number of output bits after processing the part of channel information through the first model.

In an embodiment, if the terminal device reports the model information of the selected second model through the first information, the network device may determine the size of the corresponding number of output bits according to the reported model information, and then obtain the size of the compressed first CSI, and perform corresponding reception of CSI.

In an embodiment, if the terminal device reports the selected target number of output bits through the first information, the network device may obtain the size of the compressed first CSI according to the size of the reported number of output bits, and thereby performing corresponding reception of CSI.

In an embodiment, if the terminal device reports the part of channel information through the first information, the network device may determine the size of the number of output bits of the first model according to the reported part of channel information, thereby obtaining the size of the compressed first CSI, and performing corresponding reception of CSI.

In an embodiment, if the terminal device reports the number of output bits after processing the part of channel information through the first model through the first information, the network device may directly determine the size of the compressed first CSI according to the number of output bits, and perform corresponding reception of CSI.

In some embodiments, the compressed first CSI includes a CSI part 1 and a CSI part 2. The number of bits of the CSI part 1 is fixed, and the number of bits of the CSI part 2 is determined based on a content specified by the CSI part 1.

The first information is carried by the CSI part 1.

In some embodiments, the network device determines that the terminal device omits the first CSI in a case that at least one of following is satisfied: the number of output bits of the second model being less than the first threshold; a target number of output bits being less than the first threshold; any one candidate model among multiple candidate models supported by the terminal device causing that a code rate of the uplink channel carrying the compressed first CSI is greater than a maximum transmission code rate configured by the network device; any one number of output bits among multiple numbers of output bits supported by the first model causing that the code rate of the uplink channel carrying the compressed first CSI is greater than the maximum transmission code rate configured by the network device; or the terminal device compressing the channel information input to the first model to cause that the code rate of the uplink channel carrying the compressed first CSI is greater than the maximum transmission code rate configured by the network device.

It should be noted that the first threshold is predefined, or configured by the network device.

Hereinafter, the method for information compression provided by the embodiments of the present disclosure will be described with reference to specific application scenarios.

In an application scenario, the terminal device may send a PUCCH or a PUSCH to the network device. The PUCCH or the PUSCH may carry the first CSI and the second CSI. The first CSI is CSI obtained based on an AI/ML manner, and the second CSI is CSI obtained based on a non-AI/ML manner, or CSI obtained based on an AI/ML manner.

In operation S1, when the code rate of the PUCCH or the PUSCH is higher than the maximum transmission code rate configured by the network device, the terminal device compares the priorities of the first CSI and the second CSI.

Exemplarily, the first CSI is the CSI obtained based on the AI/ML manner, and the second CSI is the CSI obtained based on the non-AI/ML manner. The type of the first CSI is different from that of the second CSI. The terminal device may determine priority orders of the first CSI and the second CSI according to predefined priority orders. If it is specified in the predefined priority orders that the priority of the AI/ML-based CSI is higher than the priority of the CSI obtained based on the non-AI/ML manner, the priority of the first CSI is higher than the priority of the second CSI. If it is specified in the predefined priority orders that the priority of the AI/ML-based CSI is lower than the priority of the CSI obtained based on the non-AI/ML manner, the priority of the first CSI is lower than the priority of the second CSI. If it is specified in the predefined priority orders that the priority of the AI/ML-based CSI is same as the priority of the CSI obtained based on the non-AI/ML manner, the terminal device may determine the priority orders of the first CSI and the second CSI according to the serving cell ID corresponding to the first CSI and the serving cell ID corresponding to the second CSI, or determine the priority orders of the first CSI and the second CSI according to the CSI report configuration ID corresponding to the first CSI and the CSI report configuration ID corresponding to the second CSI.

Exemplarily, both the first CSI and the second CSI are CSI obtained based on the AI/ML manner, the first CSI is generated by the first model, and the second CSI is generated by the third model. The terminal device may determine the priority orders of the first CSI and the second CSI according to the model information of the first model and the model information of the third model. For the manner for determining the priorities of the two pieces of CSI according to the model information, the reference is made to the description in the embodiments described above, and for the sake of brevity, the description will not be repeated here.

In the operation S2, in a case that the priority of the first CSI is lower than the priority of the second CSI, the terminal device compresses the first CSI.

It should be noted that the first CSI may include the CSI part 1 and the CSI part 2.

It may be understood that if the PUSCH or PUCCH satisfies the limitation of the maximum transmission code rate only by omitting the CSI part 2 of the first CSI, the terminal device directly omits the CSI part 2 of the first CSI. Otherwise, the terminal device may reduce the number of bits of the first CSI by adjusting the first model for generating the first CSI, so as to avoid omitting the entire CSI part 2 of the first CSI.

In operation S2.1, in an embodiment, the terminal device selects the second model with fewer output bits than the first model from the candidate models to compress the CSI part 2 of the first CSI, so as to reduce the number of output bits.

Exemplarily, the network device may pre-configure four candidate models, and the numbers of output bits of the four candidate models are 60, 80, 100, and 120 bits, respectively. If the number of output bits of the current first model is 120, the terminal may select, from the other three candidate models, a model, having the maximum number of output bits, and causing that the PUSCH or PUCCH satisfies the limitation of the maximum transmission code rate. It is assumed that the limitation of the maximum transmission code rate is satisfied only when the number of output bits is less than 90, a candidate model with the number of output bits of 80 may be selected to replace the first model. In this case, the terminal device may replace the first model with the second model, and although reducing the number of output bits affects the accuracy of the first CSI report, it can be avoided that the entire CSI part 2 of the first CSI is omitted, and the performance of the entire system is improved.

If the number of output bits of the selected second model is lower than the first threshold, the terminal device may omit the CSI part 2 of the first CSI. That is to say, if the number of output bits of the second model is too few to satisfy the requirement of the CSI feedback accuracy, the corresponding CSI part 2 can be directly omitted, thereby saving overhead. In this case, the terminal device does not need to output the corresponding CSI by performing inference based on the model.

If the numbers of output bits of all candidate models cannot cause that the PUCCH or PUSCH satisfies the limitation of the maximum transmission code rate, the terminal device omits the entire CSI part 2 of the first CSI. Exemplarily, if the minimum number of output bits among the numbers of output bits of four candidate models cannot satisfy the limitation of the maximum code rate of the PUSCH or the PUCCH (for example, the limitation of the maximum code rate is satisfied only when the number of output bits is less than 60), the entire CSI part 2 of the first CSI may be directly omitted.

Further, the terminal device may report the model information of the selected second model to the network device through the CSI part 1 of the first CSI.

In operation S2.2, in an embodiment, the terminal device selects an appropriate number of output bits from multiple different numbers of output bits supported by the first model, and compresses the CSI part 2 of the first CSI, thereby reducing the number of output bits.

Exemplarily, the first model may support four different numbers of output bits (for example, the number of PMI/CQI bits), which are 60, 70, 100 and 120 bits, respectively. It is assumed that the number of output bits of the first model currently used by the terminal device is 100, the terminal may select, from the other three numbers of output bits, the maximum number of output bits causing that the PUSCH or the PUCCH satisfies the limitation of the maximum transmission code rate. It is assumed that the limitation of the maximum code rate is satisfied only when the number of output bits is less than 80. The terminal device may select 70 bits as the number of output bits of the first model. Although reducing the number of output bits will affect the accuracy of the first CSI report, it can be avoided that the entire CSI part 2 of the first CSI is omitted, and the performance of the entire system is improved.

If the number of output bits of the selected first model is lower than the first threshold, the terminal device may omit the entire CSI part 2 of the first CSI. That is to say, if the selected number of output bits is too few to satisfy the requirement of CSI feedback accuracy, the entire CSI part 2 of the first CSI may be directly omitted, thereby saving overhead. At this time, the terminal device does not need to output the corresponding CSI by performing inference based on the model

If all the numbers of output bits supported by the first model cannot cause that the PUCCH or PUSCH satisfies the limitation of the maximum transmission code rate, the terminal device omits the entire CSI part 2 of the first CSI. For example, if the minimum number of output bits among the four different numbers of output bits supported by the first model cannot satisfy the limitation of the maximum code rate of the PUSCH or the PUCCH (for example, the limitation of the maximum code rate is satisfied only when the number of output bits is less than 60), the entire CSI part 2 of the first CSI may be directly omitted.

Further, the terminal device may report the selected number of output bits to the network device through the CSI part 1 of the first CSI. The information indicated by the terminal device may be an index of the selected number of output bits among multiple numbers of output bits supported by the current model.

In operation S2.3, in an embodiment, the terminal device adjusts the corresponding number of output bits by compressing the input of the first model, and compresses the CSI part 2 of the first CSI, thereby reducing the number of output bits.

In some embodiments, the terminal device only takes channel information of a part of the subbands as the input of the first model. For example, only the channel information of the even-numbered subbands is taken as the input of the first model, and the channel information of the odd-numbered subbands is not taken as the input of the first model. Here, the channel information of the subband may be a feature vector of the subband, a phase of the subband, or the like.

In some embodiments, the terminal device only takes channel information of the wideband as the input of the first model. For example, the terminal device does not take the channel information of the subbands as the input of the model. Here, the channel information of the wideband may be a feature vector of the wideband, a beam of the wideband, a delay of the wideband, or the like.

In some embodiments, the terminal device takes only the part of beam information as the input of the first model. For example, the terminal device does not take all of the beam information as the input of the first model, but only selects the sampled beams as the input.

In some embodiments, the terminal device only takes a part of delay information as the input of the first model. For example, the terminal device does not take all of the channel delay information as the input of the first model, but only selects a part of the delay information as the input.

Further, the terminal device may report the number of output bits of the model after the input is restricted to the network device through the CSI part 1 of the first CSI. For example, the number of PMI quantization bits after the input is restricted is reported to the network device through the CSI part 1.

It should be noted that if the terminal device does not omit the entire CSI part 2 of the first CSI, the terminal device may send the CSI part 1 of the first CSI and the compressed CSI part 2 to the network device through the PUSCH or the PUCCH.

In operation S3, the network device receives the PUSCH or PUCCH sent by the terminal device.

It should be noted that the network device also needs to perform an operation similar to that of the terminal device to determine whether the first CSI is compressed by the terminal device and the size of the number of output bits after compression, thereby correctly performing the reception of the CSI feedback information.

If the terminal device reports related information for adjusting the first model through the CSI part 1 of the first CSI (for example, model information of the second model selected by the terminal device in the operation S2.1, the number of output bits selected by the terminal device in the operation S2.2, or the number of output bits of the model after the input is restricted in the operation S2.3), the network device may obtain the number of bits of the compressed CSI part 2 in the first CSI according to the information reported in the CSI part 1 of the first CSI, and thereby performing the corresponding reception of CSI.

After receiving the compressed CSI part 2 of the first CSI, the network device may take the compressed CSI part 2 as an input of the model of the decoder, thereby restoring actual channel information, such as the feature vectors of subbands, beams and delay information, or the like.

The method for information compression provided in the embodiments of the present disclosure may be used as an alternative to CSI omission. In the method for information compression according to the embodiments of the present disclosure, when the great number of bits is carried in the AI/ML-based first CSI, and the uplink channel carrying the first CSI does not satisfy the limitation of the maximum transmission code rate, the terminal device may adjust the first model for generating the first CSI, and process the channel information by using the adjusted first model to generate the compressed first CSI, thereby reducing the number of bits of the first CSI. In addition, the compressed first CSI may also be used for the network device to recover the complete channel information, and the compressed first CSI may represent the complete channel information. According to the method for information compression provided by the embodiments of the present disclosure, the number of bits of the CSI can be reduced, and the integrity of channel information can be ensured, and further the communication performance of the system can be ensured.

The preferred embodiments of the present disclosure have been described in detail above with reference to the accompanying drawings, but the present disclosure is not limited to the specific details in the above-described embodiments. Within the scope of the technical concept of the present disclosure, a variety of simple modifications may be made to the technical solutions of the present disclosure, and these simple modifications all belong to the scope of protection of the present disclosure. For example, various specific technical features described in the above-described embodiments may be combined in any suitable manner without contradiction, and various possible combinations are not be described separately in the present disclosure in order to avoid unnecessary repetition. For example, various embodiments of the present disclosure may be combined arbitrarily, and as long as they do not contradict the idea of the present disclosure, they should be regarded as the disclosure of the present disclosure as well. For another example, various embodiments described in the present disclosure and/or the technical features in the embodiments may be arbitrarily combined with the prior art, and the technical solutions obtained after the combination should also fall within the scope of protection of the present disclosure.

It should also be understood that in various method embodiments of the present disclosure, the size of the serial numbers of the above-described processes does not mean an execution sequence, and the execution sequence of the processes should be determined by the function and internal logic thereof, and should not constitute any limitation on the implementation of the embodiments of the present disclosure. In addition, in the embodiments of the present disclosure, the terms "downlink", "uplink" and "sidelink" indicate a transmission direction of a signal or data. The "downlink" indicates that the transmission direction of the signal or data is the first direction transmitted from a station to user equipment of the cell, and the "uplink" indicates that the transmission direction of the signal or data is the second direction transmitted from the user equipment of the cell to the station. The "sidelink" indicates that a transmission direction of the signal or data is the third direction transmitted from the user equipment 1 to the user equipment 2. For example, "downlink signal" indicates that the transmission direction of the signal is the first direction. In addition, in the embodiments of the present disclosure, the term "and/or" is only used for describing one kind of association relationship of association objects, and indicates that there may be three relationships. Specifically, A and/or B may represent three cases that A exists alone, A and B exist simultaneously, and B exists alone. In addition, the character "/" herein generally indicates that there is an "or" relationship between the association objects.

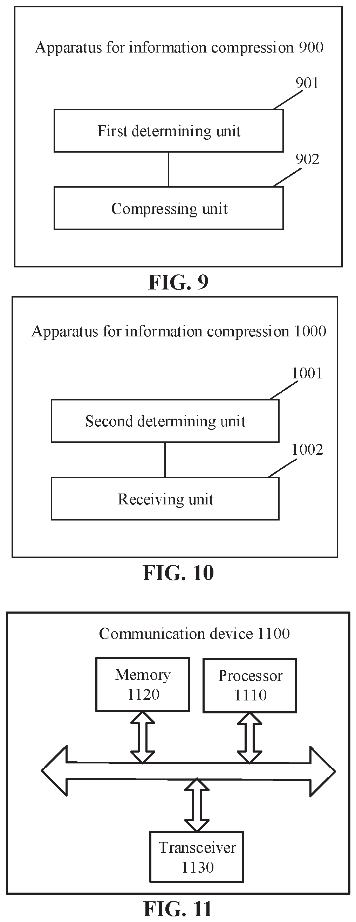

FIG. 9 is a schematic diagram of structure and composition of an apparatus 900 for information compression according to an embodiment of the present disclosure. The apparatus is applied to a terminal device. As illustrated in FIG. 9, the apparatus 900 for information compression includes the first determining unit 901 and a compressing unit 902.

The first determining unit 901 is configured to determine, according to a priority of the first CSI among at least one piece of CSI carried by an uplink channel, that the first CSI needs to be compressed. The first CSI is AI/ML-based CSI, and the uplink channel is used to carry the first CSI.

The compressing unit 902 is configured to compress the first CSI by adjusting a first model. The first model is used to generate the first CSI.

In some embodiments, the priority of the first CSI among the at least one piece of CSI carried by the uplink channel is determined based on one or more of following: a priority of AI/ML-based CSI being higher than a priority of CSI obtained based on a non-AI/ML manner; the priority of the AI/ML-based CSI being same as the priority of the CSI obtained based on the non-AI/ML manner; the priority of the AI/ML-based CSI being lower than a priority of the CSI obtained based on the non-AI/ML manner; the priority of the AI/ML-based CSI being lower than a priority of a RSRP obtained based on the non-AI/ML manner; the priority of the AI/ML-based CSI being lower than a priority of AI/ML-based RSRP report; the priority of the AI/ML-based CSI being lower than a priority of AI/ML-based beam information; the priority of the AI/ML-based CSI being lower than a priority of feedback information for model monitoring; or model information of the first model. The priority of the AI/ML-based CSI and the priority of the CSI obtained based on the non-AI/ML manner are determined based on corresponding serving cell identification information and/or CSI report configuration identification information.

In some embodiments, the model information may include one or more of following: a function of the first model, a type of the first model, or identification information of the first model.

In some embodiments, the CSI obtained based on the non-AI/ML manner includes: CSI obtained based on a codebook, and/or, CSI obtained based on a non-codebook manner.

In some embodiments, the first determining unit 901 is configured to: in a case that a code rate of the uplink channel is higher than a maximum transmission code rate configured by a network device, and the first CSI is CSI having a lowest priority among the at least one piece of CSI carried by the uplink channel, determine that the first CSI needs to compressed.

In some embodiments, the compressing unit 902 is configured to one or more of following: switch the first model to the second model, and process channel information through the second model to obtain compressed first CSI, the number of output bits of the second model being less than the number of output bits of the first mode; adjust an initial number of output bits of the first model to a target number of output bits, and process the channel information through the first model with the adjusted numbers of output bits, to obtain compressed first CSI, the target number of output bits being less than the initial number of output bits; or reduce the number of output bits of the first model by compressing channel information input to the first model, to obtain compressed first CSI.

In some embodiments, the terminal device supports multiple candidate models, and the multiple candidate models include at least the first model and the second model.

The second model is a candidate model, among the multiple candidate models, causing that a code rate of an uplink channel carrying the compressed first CSI is less than or equal to a maximum transmission code rate configured by a network device.

In some embodiments, the second model is a candidate model, among the multiple candidate models, causing that the code rate of the uplink channel carrying the compressed first CSI is less than or equal to the maximum transmission code rate configured by the network device, and having a maximum number of output bits.

In some embodiments, the multiple candidate models are predefined, or configured by the network device.

In some embodiments, the first model supports multiple numbers of output bits, and the multiple numbers of output bits include at least the initial number of output bits and the target number of output bits.

The target number of output bits is the number of output bits, among the multiple numbers of output bits, causing that a code rate of an uplink channel carrying the compressed first CSI is less than or equal to a maximum transmission code rate configured by a network device.

In some embodiments, the target number of output bits is the number of output bits, among the multiple numbers of output bits, causing that the code rate of the uplink channel carrying the compressed first CSI is less than or equal to the maximum transmission code rate configured by the network device, and having a maximum number of output bit.

In some embodiments, the multiple numbers of output bits supported by the first model are predefined, or configured by the network device.

In some embodiments, the compressing unit 902 is further configured to take a part of the channel information as an input of the first model to obtain the compressed first CSI. The part of channel information includes one or more of following: channel information of a part of subbands; channel information of wideband; a part of beam information; or a part of delay information.

In some embodiments, the apparatus 900 for information compression further includes a sending unit. The sending unit is configured to send compressed first CSI through the uplink channel. A code rate of the uplink channel is less than or equal to a maximum transmission code rate configured by a network device.

In some embodiments, the sending unit is further configured to send the first information. The first information indicates one or more of following: model information of the second model; a target number of output bits; a part of channel information; or the number of output bits after processing the part of channel information through the first model.

In some embodiments, the compressed first CSI includes a CSI part 1 and a CSI part 2, a number of bits of the CSI part 1 is fixed, and a number of bits of the CSI part 2 is determined based on a content specified by the CSI part 1. The first information is carried by the CSI part 1.

In some embodiments, the first determining unit 901 is further configured to omit the first CSI in a case that at least one of following is satisfied: the number of output bits of the second model being less than the first threshold; a target number of output bits being less than the first threshold; any one candidate model among multiple candidate models supported by the terminal device causing that a code rate of the uplink channel carrying the compressed first CSI is greater than a maximum transmission code rate configured by a network device; any one number of output bits among multiple numbers of output bits supported by the first model causing that the code rate of the uplink channel carrying the compressed first CSI is greater than the maximum transmission code rate configured by the network device; or the terminal device compressing channel information input to the first model to cause that the code rate of the uplink channel carrying the compressed first CSI is greater than the maximum transmission code rate configured by the network device.

In some embodiments, the first threshold is a predefined, or configured by the network device.

In some embodiments, the first CSI includes CSI obtained by AI/ML-based CSI compression and/or CSI obtained by AI/ML-based CSI prediction.

FIG. 10 is a schematic diagram of the structure and composition of an apparatus 1000 for information compression according to an embodiment of the present disclosure. The apparatus is applied to a terminal device. As illustrated in FIG. 10, the apparatus 1000 for information compression includes the second determining unit 1001 and a receiving unit 1002.

The second determining unit 1001 is configured to determine, according to a priority of the first CSI among at least one piece of CSI carried by an uplink channel, that a terminal device needs to compress the first CSI. The first CSI is AI/ML-based CSI, and the uplink channel is used to carry the first CSI.

The receiving unit 1002 is configured to receive compressed first CSI. The compressed first CSI is obtained by the terminal device compressing the first CSI by adjusting the first model.

In some embodiments, the priority of the first CSI among the at least one piece of CSI carried by the uplink channel is determined based on one or more of following: a priority of AI/ML-based CSI being higher than a priority of CSI obtained based on a non-AI/ML manner; the priority of the AI/ML-based CSI being same as the priority of the CSI obtained based on the non-AI/ML manner; the priority of the AI/ML-based CSI being lower than the priority of the CSI based on the non-AI/ML manner; the priority of the AI/ML-based CSI being lower than a priority of a RSRP obtained based on the non-AI/ML manner; the priority of the AI/ML-based CSI being lower a priority of AI/ML-based RSRP; the priority of the AI/ML-based CSI being lower than a priority of AI/ML-based beam information; the priority of the AI/ML-based CSI being lower than a priority of feedback information for model monitoring; or model information of the first model. The priority of the AI/ML-based CSI and the priority of the CSI obtained based on the non-AI/ML manner are determined based on corresponding serving cell identification information and/or CSI report configuration identification information.

In some embodiments, the model information may include one or more of following: a function of the first model, a type of the first model, or identification information of the first model.

In some embodiments, the CSI obtained based on the non-AI/ML manner includes: CSI obtained based on a codebook, and/or, CSI obtained based on a non-codebook manner.

In some embodiments, the second determining unit 1001 is further configured to, in a case that a code rate of the uplink channel is higher than a maximum transmission code rate configured by the network device, and the first CSI is CSI having a lowest priority among the at least one piece of CSI carried by the uplink channel, determine that the first CSI is compressed by the terminal device.

In some embodiments, the compressed first CSI is obtained through one or more of the following three manners.

The compressed first CSI is obtained by the terminal device switching the first model to the second model and processing channel information through the second model. The number of output bits of the second model is less than the number of output bits of the first model.

The compressed first CSI is obtained by the terminal device adjusting an initial number of output bits of the first model to a target number of output bits, and processing the channel information through the first model with the adjusted numbers of output bits. The target number of output bits is less than the initial number of output bits.

The compressed first CSI is obtained by the terminal device reducing the number of output bits of the first model by compressing channel information input to the first model.

In some embodiments, the terminal device supports multiple candidate models, and the multiple candidate models include at least the first model and the second model.

The second model is a candidate model, among the multiple candidate models, causing that a code rate of an uplink channel carrying the compressed first CSI is less than or equal to a maximum transmission code rate configured by the network device.

In some embodiments, the second model is a candidate model, among the multiple candidate models, causing that the code rate of the uplink channel carrying the compressed first CSI is less than or equal to the maximum transmission code rate configured by the network device, and having a maximum number of output bits.

In some embodiments, the multiple candidate models are predefined, or configured by the network device.

In some embodiments, the first model supports multiple numbers of output bits, and the multiple numbers of output bits include at least the initial number of output bits and the target number of output bits.

The target number of output bits is a number of output bits, among the multiple numbers of output bits, causing that a code rate of an uplink channel carrying the compressed first CSI is less than or equal to a maximum transmission bit rate configured by the network device.

In some embodiments, the target number of output bits is a number of output bits, among the multiple numbers of output bits, causing that the code rate of the uplink channel carrying the compressed first CSI is less than or equal to the maximum transmission code rate configured by the network device, and having a maximum number of output bits.

In some embodiments, the multiple numbers of output bits supported by the first model are predefined, or configured by the network device.

In some embodiments, the compressed first CSI is obtained by the terminal device inputting a part of the channel information into the first model. The part of channel information includes one or more of following: channel information of a part of subbands; channel information of wideband; a part of beam information; or a part of delay information.

In some embodiments, the compressed first CSI is sent through the uplink channel, and a code rate of the uplink channel is less than or equal to a maximum transmission code rate configured by the network device.

In some embodiments, the receiving unit 1002 is further configured to receive the first information. The first information indicates one or more of following: model information of the second model; a target number of output bits; a part of channel information; or the number of output bits after processing the part of channel information through the first model.

In some embodiments, the compressed first CSI includes a CSI part 1 and a CSI part 2, a number of bits of the CSI part 1 is fixed, and a number of bits of the CSI part 2 is determined based on a content specified by the CSI part 1. The first information is carried by the CSI part 1.

In some embodiments, the second determining unit 1001 is further configured to determine that the terminal device omits the first CSI in a case that at least one of following is satisfied: the number of output bits of the second model being less than the first threshold; a target number of output bits being less than the first threshold; any one candidate model among multiple candidate models supported by the terminal device causing that a code rate of the uplink channel carrying compressed first CSI is greater than a maximum transmission code rate configured by the network device; any one number of output bits among multiple numbers of output bits supported by the first model causing that the code rate of the uplink channel carrying the compressed first CSI is greater than the maximum transmission code rate configured by the network device; or the terminal device compressing the channel information input to the first model to cause that the code rate of the uplink channel carrying the compressed first CSI is greater than the maximum transmission code rate configured by the network device.

In some embodiments, the first threshold is predefined, or configured by the network device.

In some embodiments, the first CSI includes CSI obtained by AI/ML-based CSI compression and/or CSI obtained by AI/ML-based CSI prediction.

Those skilled in the art should understand that the related description of the apparatuses for information compression described above according to the embodiments of the present disclosure may be understood with reference to the related description of the methods for information compression according to the embodiments of the present disclosure.

FIG. 11 is a schematic structural diagram of a communication device 1100 according to an embodiment of the present disclosure. The communication device may be a terminal device or a network device. The communication device 1100 illustrated in FIG. 11 includes a processor 1110. The processor 1110 may invoke and execute a computer program from a memory to implement the methods in the embodiments of the present disclosure.

Alternatively, as illustrated in FIG. 11, the communication device 1100 may further include a memory 1120. The processor 1110 may invoke and execute a computer program from the memory 1120 to implement the methods in the embodiments of the present disclosure.

The memory 1120 may be a separate device independent of the processor 1110 or may be integrated in the processor 1110.

Alternatively, as illustrated in FIG. 11, the communication device 1100 may further include a transceiver 1130, and the processor 1110 may control the transceiver 1130 to communicate with other devices. Specifically, the processor may control the transceiver to send information or data to other devices, or receive information or data sent by other devices.

The transceiver 1130 may include a transmitter and a receiver. The transceiver 1130 may further include one or more antennas.

Alternatively, the communication device 1100 may be a network device according to the embodiments of the present disclosure, and the communication device 1100 may implement corresponding flows implemented by the network device in each method according to the embodiments of the present disclosure, and the flows are not be repeated herein for the sake of brevity.

Alternatively, the communication device 1100 may specifically be a mobile terminal/terminal device according to the embodiments of the present disclosure, and the communication device 1100 may implement corresponding flows implemented by the mobile terminal/terminal device in each method according to the embodiments of the present disclosure, and the flows are not be repeated here for the sake of brevity.

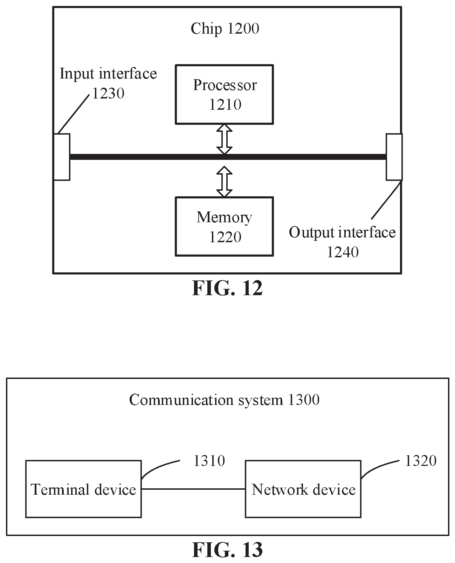

FIG. 12 is a schematic structural diagram of a chip according to an embodiment of the present disclosure. The chip 1200 illustrated in FIG. 12 includes a processor 1210. The processor 1210 may invoke and execute a computer program from a memory to implement the methods in the embodiments of the present disclosure.

Alternatively, as illustrated in FIG. 12, the chip 1200 may further include a memory 1220. The processor 1210 may invoke and execute a computer program from the memory 1220 to implement the methods in the embodiments of the present disclosure.

The memory 1220 may be a separate device independent of the processor 1210 or may be integrated in the processor 1210.

Alternatively, the chip 1000 may further include an input interface 1230. The processor 1210 may control the input interface 1230 to communicate with other devices or chips. Specifically, the processor may control the input interface to acquire information or data sent by other devices or chips.

Alternatively, the chip 1200 may further include an output interface 1240. The processor 1210 may control the output interface 1240 to communicate with other devices or chips. Specifically, the processor may control the output interface to output information or data to other devices or chips.

Alternatively, the chip may be applied to the network device in the embodiments of the present disclosure, and the chip may implement the corresponding flows implemented by the network device in each method of the embodiments of the present disclosure, and the flows are not be repeated here for the sake of brevity.

Alternatively, the chip may be applied to the mobile terminal/terminal device in the embodiments of the present disclosure, and the chip may implement the corresponding flows implemented by the mobile terminal/terminal device in each method of the embodiments of the present disclosure, and the flows are not be repeated here for the sake of brevity.

It should be understood that the chip mentioned in the embodiments of the present disclosure may also be referred to as a system-level chip, a system chip, a chip system, a system-on-chip chip, or the like.

FIG. 13 is a schematic block diagram of a communication system 1300 according to an embodiment of the present disclosure. As illustrated in FIG. 13, the communication system 1300 includes a terminal device 1310 and a network device 1320.

The terminal device 1310 may be used to implement the functions implemented by the terminal device in the above-described method, and the network device 1320 may be used to implement the functions implemented by the network device in the above-described method, and the description of the functions are not repeated here for the sake of brevity.

It should be understood that the processor of the embodiments of the present disclosure may be an integrated circuit chip having signal processing capabilities. In the implementation process, the operations of the above-described method embodiments may be completed by integrated logic circuits of hardware in the processor or instructions in the form of software. The processor described above may be a general-purpose processor, a Digital Signal Processor (DSP), an Application Specific Integrated Circuit (ASIC), a Field Programmable Gate Array (FPGA) or other programmable logic device, a discrete gate or transistor logic device, or a discrete hardware component, to implement or execute the methods, operations and logical block diagrams disclosed in the embodiments of the present disclosure. The methods, operations, and logical block diagrams disclosed in the embodiments of the present disclosure may be implemented or executed. The general purpose processor may be a microprocessor or the processor may be any conventional processor or the like. The operations of the method disclosed in connection with the embodiments of the present disclosure may be directly be executed by the hardware decoding processor, or may be executed by combining hardware and software modules in the decoding processor. The software module may be provided in a storage medium mature in the art, such as a random access memory, a flash memory, a read-only memory, a programmable read-only memory, or an electrically erasable programmable memory, a register, etc. The storage medium is arranged in the memory, and the processor reads the information in the memory, and completes the operations of the above methods in combination with the hardware thereof.

It is understood that the memory in the embodiments of the present disclosure may be a volatile memory or a non-volatile memory, or may include both volatile and non-volatile memory. The non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which serves as an external cache. By way of illustration, but not limitation, many forms of RAM are available, such as a static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) and a Direct Rambus RAM (DR RAM). It should be noted that the memory of the systems and methods described herein is intended to include, but is not limited to, these and any other suitable type of memory.

It should be understood that the above memory is illustrative but is not limited thereto. For example, the memory in the embodiments of the present disclosure may also be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch link DRAM (SLDRAM) and a Direct Rambus RAM (DR RAM), and the like. That is, the memory in the embodiments of the present disclosure is intended to include, but is not limited to, these and any other suitable type of memory.

The embodiments of the present disclosure further provide a computer-readable storage medium for storing a computer program.

Alternatively, the computer-readable storage medium may be applied to the network device in the embodiments of the present disclosure, and the computer program causes the computer to execute the flows implemented by the network device in each method in the embodiments of the present disclosure, and the flows are not repeatedly described herein for the sake of brevity.

Alternatively, the computer-readable storage medium may be applied to the mobile terminal/terminal device in the embodiments of the present disclosure, and the computer program causes the computer to execute the flows implemented by the mobile terminal/terminal device in each method of the embodiments of the present disclosure, and the flows are not repeatedly described herein for the sake of brevity.

The embodiments of the present disclosure further provide a computer program product including computer program instructions.

Alternatively, the computer program product may be applied to the network device in the embodiments of the present disclosure, and the computer program instructions cause the computer to execute the flows implemented by the network device in each method in the embodiments of the present disclosure, and the description of the flows is not repeated here for the sake of brevity.

Alternatively, the computer program product may be applied to the mobile terminal/terminal device in the embodiments of the present disclosure, and the computer program instructions cause the computer to execute the flows implemented by the mobile terminal/terminal device in each method of the embodiments of the present disclosure, and the description of the flows is not repeated here for the sake of brevity.

The embodiments of the present disclosure further provide a computer program.

Alternatively, the computer program may be applied to the network device in the embodiments of the present disclosure, and the computer program, when run on the computer, enables the computer to execute the flows implemented by the network device in each method of the embodiments of the present disclosure, and the description of the flows is not repeated here for the sake of brevity.

Alternatively, the computer program may be applied to the mobile terminal/terminal device in the embodiments of the present disclosure, and the computer program, when run on the computer, enables the computer to execute the flows implemented by the mobile terminal/terminal device in each method of the embodiments of the present disclosure, and the description of the flows is not repeated here for the sake of brevity.

Those of ordinary skill in the art will appreciate that the elements and algorithmic steps of the various examples described in connection with the embodiments disclosed herein may be implemented in electronic hardware, or a combination of computer software and electronic hardware. Whether these functions are executed in hardware or software depends on the specific application and design constraints of the technical solution. Those skilled in the art may use different methods for implementing the described functions for each particular application, but such implementations should not be considered beyond the scope of the present disclosure.

Those skilled in the art may clearly understand that, for convenience and brevity of the description, regarding the specific operation processes of the systems, devices, and units described above, reference may be made to the corresponding processes in the aforementioned method embodiments, and the specific operation processes of the systems, devices, and units described above are not repeated here.

In several embodiments provided herein, it should be understood that the disclosed systems, apparatuses, and methods may be implemented in other ways. For example, the apparatuses embodiments described above are merely schematic, for example, the division of units is only one logical function division, and there may be other division methods in actual implementation, for example, multiple units or components may be combined or integrated into another system, or some features may be ignored or not implemented. In addition, the coupling or direct coupling or communication connection shown or discussed may be an indirect coupling or communication connection through some interface, device or unit, which may be electrical, mechanical or otherwise.

The units described as separate units may or may not be physically separate, and the units displayed as units may or may not be physical units, that is, the units may be located at one place or may be distributed over multiple network units. Some or all of the units may be selected according to actual needs to achieve the purpose of the solutions of the present embodiment.

In addition, various functional units in each embodiment of the present disclosure may be integrated in one processing unit, each unit may be physically present alone, or two or more units may be integrated in one unit.

The functions may be stored in a computer-readable storage medium if implemented in the form of software functional units and sold or used as independent products. Based on this understanding, the technical solution of the present disclosure essentially or a part of the technical solution that contributes to the prior art or a part of the technical solution may be embodied in the form of a software product, the computer software product is stored in a storage medium, includes several instructions for causing a computer device (which may be a personal computer, server, or network device, etc.) to perform all or a part of the operations of the methods described in various embodiments of the present disclosure. The storage medium includes a USB disk, a removable hard disk, a Read-Only Memory (ROM), a Random Access Memory (RAM), a magnetic disk, or an optical disk or a medium capable of storing program codes.

The foregoing is merely a specific embodiment of the present disclosure, but the scope of protection of the present disclosure is not limited thereto, and changes or substitutions easily conceived by any person skilled in the art within the technical scope disclosed in the present disclosure should be covered within the scope of protection of the present disclosure. Therefore, the scope of protection of the present disclosure should be subject to the scope of protection of the claims.

## Claims

1. A method for information compression, comprising:
determining, by a terminal device according to a priority of first Channel State Information (CSI) among at least one piece of CSI carried by an uplink channel, that the first CSI needs to be compressed, wherein the first CSI is Artificial Intelligence (Al)/Machine Learning (ML)-based CSI, and the uplink channel is used to carry the first CSI; and
compressing, by the terminal device, the first CSI by adjusting a first model, wherein the first model is used to generate the first CSI.

2. The method of claim 1, wherein the priority of the first CSI among the at least one piece of CSI carried by the uplink channel is determined based on one or more of following:
a priority of AI/ML-based CSI being higher than a priority of CSI obtained based on a non-AI/ML manner;
the priority of the AI/ML-based CSI being same as the priority of the CSI obtained based on the non-AI/ML manner, wherein the priority of the AI/ML-based CSI and the priority of the CSI obtained based on the non-AI/ML manner are determined based on corresponding serving cell identification information and/or CSI report configuration identification information;
the priority of the AI/ML-based CSI being lower than the priority of the CSI obtained based on the non-AI/ML manner;
the priority of the AI/ML-based CSI being lower than a priority of a Reference Signal Receiving Power (RSRP) obtained based on the non-AI/ML manner;
the priority of the AI/ML-based CSI being lower than a priority of AI/ML-based RSRP report;
the priority of the AI/ML-based CSI being lower than a priority of AI/ML-based beam information;
the priority of the AI/ML-based CSI being lower than a priority of feedback information for model monitoring; or
model information of the first model.

3. The method of claim 2, wherein the model information comprises one or more of following:
a function of the first model, a type of the first model, or identification information of the first model.

4. The method of claim 2 or 3, wherein the CSI obtained based on the non-AI/ML manner comprises:
CSI obtained based on a codebook, and/or, CSI obtained based on a non-codebook manner.

5. The method of any one of claims 1 to 4, wherein determining, by the terminal device according to the priority of the first CSI among the at least one piece of CSI carried by the uplink channel, that the first CSI needs to be compressed comprises:
in a case that a code rate of the uplink channel is higher than a maximum transmission code rate configured by a network device, and the first CSI is CSI having a lowest priority among the at least one piece of CSI carried by the uplink channel, determining, by the terminal device, that the first CSI needs to be compressed.

6. The method of any one of claims 1 to 5, wherein compressing, by the terminal device, the first CSI by adjusting the first model comprises one or more of following:
switching the first model to a second model, and processing channel information through the second model to obtain compressed first CSI, wherein a number of output bits of the second model is less than a number of output bits of the first model;
adjusting an initial number of output bits of the first model to a target number of output bits, and processing the channel information through a first model with adjusted number of output bits, to obtain compressed first CSI, wherein the target number of output bits is less than the initial number of output bits; or
reducing the number of output bits of the first model by compressing channel information input to the first model, to obtain compressed first CSI.

7. The method of claim 6, wherein the terminal device supports a plurality of candidate models, and the plurality of candidate models comprise at least the first model and the second model; and
the second model is a candidate model, among the plurality of candidate models, causing that a code rate of an uplink channel carrying the compressed first CSI is less than or equal to a maximum transmission code rate configured by a network device.

8. The method of claim 7, wherein
the second model is a candidate model, among the plurality of candidate models, causing that the code rate of the uplink channel carrying the compressed first CSI is less than or equal to the maximum transmission code rate configured by the network device, and having a maximum number of output bits.

9. The method of claim 7 or 8, wherein the plurality of candidate models are predefined, or configured by the network device.

10. The method of claim 6, wherein the first model supports a plurality of numbers of output bits, and the plurality of numbers of output bits comprise at least the initial number of output bits and the target number of output bits; and
the target number of output bits is a number of output bits, among the plurality of numbers of output bits, causing that a code rate of an uplink channel carrying the compressed first CSI is less than or equal to a maximum transmission code rate configured by a network device.

11. The method of claim 10, wherein
the target number of output bits is a number of output bits, among the plurality of numbers of output bits, causing that the code rate of the uplink channel carrying the compressed first CSI is less than or equal to the maximum transmission code rate configured by the network device, and having a maximum number of output bits.

12. The method of claim 10 or 11, wherein
the plurality of numbers of output bits supported by the first model are predefined, or configured by the network device.

13. The method of claim 6, wherein reducing the number of output bits of the first model by compressing the channel information input to the first model, to obtain the compressed first CSI comprises:
taking a part of the channel information as an input of the first model to obtain the compressed first CSI, wherein the part of the channel information comprises one or more of following:
channel information of a part of subbands;
channel information of wideband;
a part of beam information; or
a part of delay information.

14. The method of any one of claims 1 to 13, further comprising:
sending, by the terminal device, the compressed first CSI through the uplink channel, wherein a code rate of the uplink channel is less than or equal to a maximum transmission code rate configured by a network device.

15. The method of any one of claims 1 to 14, further comprising:
sending, by the terminal device, first information, wherein the first information indicates one or more of following:
model information of a second model;
a target number of output bits;
a part of channel information; or
a number of output bits after processing the part of channel information through the first model.

16. The method of claim 15, wherein the compressed first CSI comprises a CSI part 1 and a CSI part 2, a number of bits of the CSI part 1 is fixed, and a number of bits of the CSI part 2 is determined based on a content specified by the CSI part 1; and
the first information is carried by the CSI part 1.

17. The method of any one of claims 1 to 13, further comprising: omitting, by the terminal device, the first CSI in a case that at least one of following is satisfied:
a number of output bits of a second model being less than a first threshold;
a target number of output bits being less than the first threshold;
any one candidate model, among a plurality of candidate models supported by the terminal device, causing that a code rate of the uplink channel carrying compressed first CSI is greater than a maximum transmission code rate configured by a network device;
any one number of output bits, among a plurality of numbers of output bits supported by the first model, causing that the code rate of the uplink channel carrying the compressed first CSI is greater than the maximum transmission code rate configured by the network device; or
the terminal device compressing channel information input to the first model to cause that the code rate of the uplink channel carrying the compressed first CSI is greater than the maximum transmission code rate configured by the network device.

18. The method of claim 17, wherein the first threshold is a predefined, or configured by the network device.

19. The method of any one of claims 1 to 18, wherein the first CSI comprises CSI obtained by AI/ML-based CSI compression and/or CSI obtained by AI/ML-based CSI prediction.

20. A method for information compression, comprising:
determining, by a network device according to a priority of first Channel State Information (CSI) among at least one piece of CSI carried by an uplink channel, that a terminal device needs to compress the first CSI, wherein the first CSI is Artificial Intelligence (Al)/Machine Learning (ML)-based CSI, and the uplink channel is used to carry the first CSI; and
receiving, by the network device, compressed first CSI, wherein the compressed first CSI is obtained by the terminal device compressing the first CSI by adjusting a first model.

21. The method of claim 20, wherein the priority of the first CSI among the at least one piece of CSI carried by the uplink channel is determined based on one or more of following:
a priority of AI/ML-based CSI being higher than a priority of CSI obtained based on a non-AI/ML manner;
the priority of the AI/ML-based CSI being same as the priority of the CSI obtained based on the non-AI/ML manner, wherein the priority of the AI/ML-based CSI and the priority of the CSI obtained based on the non-AI/ML manner are determined based on corresponding serving cell identification information and/or CSI report configuration identification information;
the priority of the AI/ML-based CSI being lower than the priority of the CSI obtained based on the non-AI/ML manner;
the priority of the AI/ML-based CSI being lower than a priority of a Reference Signal Receiving Power (RSRP) obtained based on the non-AI/ML manner;
the priority of the AI/ML-based CSI being lower a priority of AI/ML-based RSRP;
the priority of the AI/ML-based CSI being lower than a priority of AI/ML-based beam information;
the priority of the AI/ML-based CSI being lower than a priority of feedback information for model monitoring; or
model information of the first model.

22. The method of claim 21, wherein the model information comprises one or more of following:
a function of the first model, a type of the first model, or identification information of the first model.

23. The method of claim 21 or 22, wherein the CSI obtained based on the non-AI/ML manner comprises:
CSI obtained based on a codebook, and/or, CSI obtained based on a non-codebook manner.

24. The method of any one of claims 20 to 23, wherein determining, by the network device according to the priority of the first CSI among the at least one piece of CSI carried by the uplink channel, that the terminal device needs to compress the first CSI comprises:
in a case that a code rate of the uplink channel is higher than a maximum transmission code rate configured by the network device, and the first CSI is CSI having a lowest priority among the at least one piece of CSI carried by the uplink channel, determining, by the network device, that the first CSI is compressed by the terminal device.

25. The method of any one of claims 20 to 24, further comprising one or more of following:
the compressed first CSI being obtained by the terminal device switching the first model to a second model and processing channel information through the second model, wherein a number of output bits of the second model is less than a number of output bits of the first model;
the compressed first CSI being obtained by the terminal device adjusting an initial number of output bits of the first model to a target number of output bits, and processing the channel information through a first model with adjusted number of output bits, wherein the target number of output bits is less than the initial number of output bits; or
the compressed first CSI being obtained by the terminal device reducing the number of output bits of the first model by compressing channel information input to the first model.

26. The method of claim 25, wherein the terminal device supports a plurality of candidate models, and the plurality of candidate models comprise at least the first model and the second model; and
the second model is a candidate model, among the plurality of candidate models, causing that a code rate of an uplink channel carrying the compressed first CSI is less than or equal to a maximum transmission code rate configured by the network device.

27. The method of claim 26, wherein
the second model is a candidate model, among the plurality of candidate models, causing that the code rate of the uplink channel carrying the compressed first CSI is less than or equal to the maximum transmission code rate configured by the network device, and having a maximum number of output bits.

28. The method of claim 26 or 27, wherein the plurality of candidate models are predefined, or configured by the network device.

29. The method of claim 25, wherein the first model supports a plurality of numbers of output bits, and the plurality of numbers of output bits comprise at least the initial number of output bits and the target number of output bits; and
the target number of output bits is a number of output bits, among the plurality of numbers of output bits, causing that a code rate of an uplink channel carrying the compressed first CSI is less than or equal to a maximum transmission code rate configured by the network device.

30. The method of claim 29, wherein
the target number of output bits is a number of output bits, among the plurality of numbers of output bits, causing that the code rate of the uplink channel carrying the compressed first CSI is less than or equal to the maximum transmission code rate configured by the network device, and having a maximum number of output bits.

31. The method of claim 29 or 30, wherein
the plurality of numbers of output bits supported by the first model are predefined, or configured by the network device.

32. The method of claim 25, wherein the compressed first CSI being obtained by reducing the number of output bits of the first model by compressing channel information input to the first model comprises:
the compressed first CSI being obtained by inputting a part of the channel information into the first model, wherein the part of the channel information comprises one or more of following:
channel information of a part of subbands;
channel information of wideband;
a part of beam information; or
a part of delay information.

33. The method of any one of claims 20 to 32, wherein the compressed first CSI is sent through the uplink channel, and a code rate of the uplink channel is less than or equal to a maximum transmission code rate configured by the network device.

34. The method of any one of claims 20 to 33, further comprising:
receiving, by the network device, first information, wherein the first information indicates one or more of following:
model information of a second model;
a target number of output bits;
a part of channel information; or
a number of output bits after processing the part of channel information through the first model.

35. The method of claim 34, wherein the compressed first CSI comprises a CSI part 1 and a CSI part 2, a number of bits of the CSI part 1 is fixed, a number of bits of the CSI part 2 is determined based on a content specified by the CSI part 1; and
the first information is carried by the CSI part 1.

36. The method of any one of claims 20 to 32, further comprising:
determining, by the network device, that the terminal device omits the first CSI in a case that at least one of following is satisfied:
a number of output bits of a second model being less than a first threshold;
a target number of output bits being less than the first threshold;
any one candidate model, among a plurality of candidate models supported by the terminal device, causing that a code rate of the uplink channel carrying the compressed first CSI is greater than a maximum transmission code rate configured by the network device;
any one number of output bits, among a plurality of numbers of output bits supported by the first model, causing that the code rate of the uplink channel carrying the compressed first CSI is greater than the maximum transmission code rate configured by the network device; or
the terminal device compressing channel information input to the first model to cause that the code rate of the uplink channel carrying the compressed first CSI is greater than the maximum transmission code rate configured by the network device.

37. The method of claim 36, wherein the first threshold is predefined, or configured by the network device.

38. The method of any one of claims 20 to 37, wherein the first CSI comprises CSI obtained by AI/ML-based CSI compression and/or CSI obtained by AI/ML-based CSI prediction.

39. An apparatus for information compression, applied to a terminal device, comprising:
a first determining unit, configured to determine, according to a priority of first Channel State Information (CSI) among at least one piece of CSI carried by an uplink channel, that the first CSI needs to be compressed, wherein the first CSI is Artificial Intelligence (Al)/Machine Learning (ML)-based CSI, and the uplink channel is used to carry the first CSI; and
a compressing unit, configured to compress the first CSI by adjusting a first model, wherein the first model is used to generate the first CSI.

40. An apparatus for information compression, applied to a network device, comprising:
a second determining unit, configured to determine, according to a priority of first Channel State Information (CSI) among at least one piece of CSI carried by an uplink channel, that a terminal device needs to compress the first CSI, wherein the first CSI is Artificial Intelligence (Al)/Machine Learning (ML)-based CSI, and the uplink channel is used to carry the first CSI; and
a receiving unit, configured to receive compressed first CSI, wherein the compressed first CSI is obtained by the terminal device compressing the first CSI by adjusting a first model.

41. A terminal device, comprising:
a memory, configured to store instructions executable on a computer; and
a processor, connected to the memory and configured to execute the instructions executable on the computer to perform the method of any one of claims 1 to 19.

42. A network device, comprising:
a memory, configured to store instructions executable on a computer; and
a processor, connected to the memory and configured to execute the instructions executable on the computer to perform the method of any one of claims 20 to 38.

43. A chip, comprising:
a processor, configured to invoke and execute a computer program from a memory to cause a device on which the chip is mounted to perform the method of any one of claims 1 to 19, or the method of any one of claims 20 to 38.

44. A computer-readable storage medium, storing a computer program thereon, wherein when the computer program is executed by at least one processor, the method of any one of claims 1 to 19 is implemented, or the method of any one of claims 20 to 38 is implemented.

45. A computer program product comprising a computer storage medium, which stores a computer program comprising instructions executable by at least one processor, wherein when the instructions is executed by the at least one processor, the method of any one of claims 1 to 19 is implemented, or the method of any one of claims 20 to 38 is implemented.

46. A computer program causing a computer to perform the method of any one of claims 1 to 19, or the method of any one of claims 20 to 38.
